# EUROPEAN PATENT APPLICATION

(11) **EP 3 541 022 A1**
(43) Date of publication of application: **18.09.2019**
(21) Application number: 17869197.8
(22) Date of filing: 09.11.2017
(51) Int. Cl.: H04L 12/28, G06F 13/00, G06F 13/36

(54) **COMMUNICATION CONTROLLER, COMMUNICATION CONTROL METHOD, AND PROGRAM**

(30) Priority: 10.11.2016 JP 2016219691; 10.11.2016 JP 2016219692; 10.11.2016 JP 2016219693; 07.11.2017 JP 2017214737
(71) Applicant: Lac Co., Ltd., Tokyo 102-0093 (JP)
(72) Inventor: ATSUMI Kiyotaka, Tokyo 102-0093 (JP)
(74) Representative: Granleese, Rhian Jane
(86) International application number: PCT/JP2017/040380
(87) International publication number: WO 2018/088462

(57) **Abstract**

A communication control device that is included in a communication system in which a terminal device communicates a frame free of any transmission source information via a network, in which a detection device having a function of detecting a frame having a specific property, and a function of transmitting first information on the frame having a specific property to the network when the detection device detects a frame having a specific property is connected to the network, and the communication control device includes a control unit that refers to a frame storage unit that stores a frame that is a transmission target output from the terminal device to the network when the control unit determines that the first information has been received from the detection device connected to the network on the basis of information for determining being the first information transmitted by the detection device, and performs a first determination to determine whether or not the frame having a specific property specified on the basis of the received first information is stored in the frame storage unit.

## Description

### [Technical Field]

The present invention relates to a communication control device, a communication control method, and a program.

Priority is claimed on Japanese Patent Application No. 2016-219691 filed November 10, 2016, Japanese Patent Application No. 2016-219692 filed November 10, 2016, Japanese Patent Application No. 2016-219693 filed November 10, 2016, and Japanese Patent Application No. 2017-214737 filed on November 7, 2017, the contents of which are incorporated herein by reference.

### [Background Art]

A controller area network (CAN) is known as a standard for communicatively connecting a plurality of devices (terminal devices). A CAN is used in the automobile field or in other fields.

In a communication system, for example, abnormalities may occur in terminal devices.

As an example, a vehicle network monitoring device according to Patent Literature 1 monitors data that is transmitted to a vehicle network mounted in a vehicle such as an automobile (see Patent Literature 1).

Further, research on prevention of unauthorized transmission in a CAN has been performed (see Non-Patent Literatures 1 and 2).

### [Citation List]

### [Patent Literature]

[Patent Literature 1] Japanese Unexamined Patent Application, First Publication No. 2013-131907

### [Non-Patent Literature]

[Non-Patent Literature 1] Masato Hata, Masato Tanabe, Katsuya Yoshioka, Kazuomi Oishi, Tsutomu Matsumoto, "Prevention of Unauthorized Transmission: This is possible in a CAN", Computer Security Symposium 2011, 19-21 October 2011, 624-629
[Non-patent document 2] Tsutomu Matsumoto, Masato Hata, Masato Tanabe, Katsunari Yoshioka, Kazuomi Oishi, "A Method of Preventing Unauthorized Data Transmission in Controller Area Network", Vehicular Technology Conference (VTC Spring), 2012 IEEE 75th

### [Summary of Invention]

### [Technical Problem]

However, in a CAN, when any one of terminal devices transmits an unauthorized frame, it is possible to detect the frame, but in some cases, it is difficult to specify the terminal device that has transmitted the frame. For example, in a CAN, an unauthorized frame can be canceled using an error frame. However, since it may be difficult to specify the terminal device that has transmitted a frame, a fundamental solution for this may be difficult. Further, there may be the same problem in networks other than a CAN.

In view of such circumstances, an embodiment of the present invention provides a communication control device, a communication control method, and a program capable of allowing specifying a terminal device that has transmitted a frame having a specific property such as an unauthorized frame.

### [Solution to Problem]

A communication control device according to an embodiment of the present invention is a communication control device that is included in a communication system in which a terminal device communicates a frame free of any transmission source information via a network, wherein a detection device having a function of detecting a frame having a specific property, and a function of transmitting first information on the frame having a specific property to the network when the detection device detects the frame having a specific property is connected to the network, the communication control device includes a control unit that refers to a frame storage unit that stores a frame that is a transmission target output from the terminal device to the network when the control unit determines that the first information has been received from the detection device connected to the network on the basis of information for determining being the first information transmitted by the detection device, and performs a first determination to determine whether or not the frame having a specific property specified on the basis of the received first information is stored in the frame storage unit, and the first information includes information on content of the frame that is the transmission target output from the terminal device to the network as it is or digest information of the frame that is the transmission target.

In the communication control device according to an aspect of the present invention, a configuration in which the communication control device is a transfer control device that is included for each terminal device between the network and the terminal device and controls transfer of the frame between the network and the terminal device, and the frame that is the transmission target is the frame that is a transfer target of the communication control device may be used.

In the communication control device according to an aspect of the present invention, a configuration in which when the control unit determines that the frame having a specific property is stored in the frame storage unit in the first determination, the control unit stops a part or all of the transfer may be used.

In the communication control device according to an aspect of the present invention, a configuration in which when the control unit determines that the frame having a specific property is stored in the frame storage unit in the first determination, the control unit transmits information on a result of the determination to the network may be used.

In the communication control device according to an aspect of the present invention, a configuration in which the information on the determination result in the first determination is not transmitted to the terminal device may be used.

In the communication control device according to an aspect of the present invention, a configuration in which the first information on the frame having a specific property is not transmitted to the terminal device may be used.

In the communication control device according to an aspect of the present invention, a configuration in which the communication control device includes a transfer unit that performs the transfer may be used.

In the communication control device according to an aspect of the present invention, a configuration in which the communication control device is integrated with the terminal device may be used.

In the communication control device according to an aspect of the present invention, a configuration in which when the control unit determines that the frame having a specific property is stored in the frame storage unit in the first determination, the control unit interrupts communication between the terminal device and the network may be used.

In the communication control device according to an aspect of the present invention, a configuration in which when the control unit determines that the frame having a specific property is stored in the frame storage unit in the first determination, the control unit transmits information on a result of the determination to the network may be used.

In the communication control device according to an aspect of the present invention, a configuration in which the digest information is information of content of a part of a frame that is a transmission target as it is or summary information of the content of a frame that is the transmission target may be used.

In the communication control device according to an aspect of the present invention, a configuration in which the control unit performs a second determination to determine an abnormality in the terminal device when a frame matching a frame defined to be transmitted by a device that transmits the first information on the frame having a specific property is transmitted from the terminal device, as a determination separate from the first determination may be used.

In the communication control device according to an aspect of the present invention, a configuration in which the control unit performs a third determination to determine an abnormality in the terminal device when a frame matching a frame defined to be transmitted by the control unit is transmitted from the terminal device, as a determination separate from the first determination may be used.

In the communication control device according to an aspect of the present invention, a configuration in which the communication control device includes the frame storage unit may be used.

In the communication control device according to an aspect of the present invention, a configuration in which the frame having a specific property is an unauthorized frame may be used.

In the communication control device according to an aspect of the present invention, a configuration in which the control unit determines whether or not identification information held in a blacklist holding the identification information that is not transmitted by a device other than the terminal device is included in a frame transferred from the network to the terminal device may be used.

In the communication control device according to an aspect of the present invention, a configuration in which when the control unit determines that identification information held in the blacklist is included in a frame transferred from the network to the terminal device, the control unit transmits information on a result of the determination to the network may be used.

A communication control method according to an embodiment of the present invention is a communication control method that is executed by a control unit included in a communication control device included in a communication system in which a terminal device communicates a frame free of any transmission source information via a network, wherein a detection device having a function of detecting a frame having a specific property and a function of transmitting first information on the frame having a specific property to the network when the frame having the specific property has been detected is connected to the network, the control unit refers to a frame storage unit that stores a frame that is a transmission target output from the terminal device to the network when the control unit determines that the first information has been received from the detection device connected to the network on the basis of information for determining being the first information transmitted by the detection device, and determines whether or not the frame having a specific property specified on the basis of the received first information is stored in the frame storage unit, and the first information includes information on content of a frame that is the transmission target output from the terminal device to the network as it is or digest information of the frame that is the transmission target.

A program according to an embodiment of the present invention is a program for causing a computer constituting a communication control device included in a communication system in which a terminal device communicates a frame free of any transmission source information via a network that communicates the frame, a detection device having a function of detecting a frame having a specific property and a function of transmitting first information on the frame having a specific property to the network when the frame having a specific property has been detected being connected to the network, to realize a function of referring to a frame storage unit that stores a frame that is a transmission target output from the terminal device to the network when it is determined that the first information has been received from the detection device connected to the network on the basis of information for determining being the first information transmitted by the detection device, and determining whether or not the frame having a specific property specified on the basis of the received first information is stored in the frame storage unit, wherein the first information includes information on content of the frame that is the transmission target output from the terminal device to the network as it is or digest information of the frame that is the transmission target.

A communication control device according to an embodiment of the present invention is a communication control device that is included in a communication system in which a terminal device communicates a frame free of any transmission source information via a network, wherein a detection device having a function of detecting a frame having a specific property, and a function of transmitting first information on the frame having a specific property to the network when the detection device detects a frame having a specific property is connected to the network, the communication control device includes a control unit that refers to a frame storage unit that stores a frame after transmission output from the terminal device to the network when the control unit determines that the first information has been received from the detection device connected to the network on the basis of information for determining being the first information transmitted by the detection device, and performs a first determination to determine whether or not the frame having a specific property specified on the basis of the received first information is stored in the frame storage unit, and the first information includes information on content of the frame after transmission output from the terminal device to the network as it is or digest information of the frame after transmission.

In the communication control device according to an aspect of the present invention, a configuration in which the communication control device is a transfer control device that controls transfer of the frame between the network and the terminal device, and the frame after transmission is the frame after transfer by the communication control device may be used.

In the communication control device according to an aspect of the present invention, a configuration in which when the control unit determines that the frame having a specific property is stored in the frame storage unit in the first determination, the control unit stops a part or all of the transfer may be used.

In the communication control device according to an aspect of the present invention, a configuration in which when the control unit determines that the frame having a specific property is stored in the frame storage unit in the first determination, the control unit transmits information on a result of the determination to the network may be used.

In the communication control device according to an aspect of the present invention, a configuration in which the information on the determination result in the first determination is not transmitted to the terminal device may be used.

In the communication control device according to an aspect of the present invention, a configuration in which the first information on the frame having a specific property is not transmitted to the terminal device may be used.

In the communication control device according to an aspect of the present invention, a configuration in which communication control devices are included with the terminal devices on a one-to-one basis, and the control unit performs a second determination to determine an abnormality in the terminal device when a frame matching a frame defined to be transmitted by a device that transmits the first information on the frame having a specific property is transmitted from the terminal device, as a determination separate from the first determination may be used.

In the communication control device according to an aspect of the present invention, a configuration in which communication control devices are included with the terminal devices on a one-to-one basis, and the control unit performs a third determination to determine an abnormality in the terminal device when a frame matching a frame defined to be transmitted by the control unit is transmitted from the terminal device, as a determination separate from the first determination may be used.

In the communication control device according to an aspect of the present invention, a configuration in which the communication control device includes a transfer unit that performs the transfer may be used.

In the communication control device according to an aspect of the present invention, a configuration in which the communication control device is integrated with the terminal device may be used.

In the communication control device according to an aspect of the present invention, a configuration in which when the control unit determines that the frame having a specific property is stored in the frame storage unit in the first determination, the control unit interrupts communication between the terminal device and the network may be used.

In the communication control device according to an aspect of the present invention, a configuration in which when the control unit determines that the frame having a specific property is stored in the frame storage unit in the first determination, the control unit transmits information on a result of the determination to the network may be used.

In the communication control device according to an aspect of the present invention, a configuration in which the control unit performs a second determination to determine an abnormality in the terminal device when a frame matching a frame defined to be transmitted by a device transmitting the first information on the frame having a specific property is transmitted from the terminal device, as a determination separate from the first determination may be used.

In the communication control device according to an aspect of the present invention, a configuration in which the control unit performs a third determination to determine an abnormality in the terminal device when a frame matching a frame defined to be transmitted by the control unit is transmitted from the terminal device, as a determination separate from the first determination may be used.

In the communication control device according to an aspect of the present invention, a configuration in which the digest information is information of content of a part of the frame after the transmission as it is or summary information of the content of the frame after the transmission may be used.

In the communication control device according to an aspect of the present invention, a configuration in which the communication control device includes the frame storage unit may be used.

In the communication control device according to an aspect of the present invention, a configuration in which the frame having a specific property is an unauthorized frame may be used.

In the communication control device according to an aspect of the present invention, a configuration in which the control unit determines whether or not identification information held in a blacklist holding the identification information that is not transmitted by a device other than the terminal device is included in the frame transferred from the network to the terminal device may be used.

In the communication control device according to an aspect of the present invention, a configuration in which when the control unit determines that identification information held in the blacklist is included in the frame transferred from the network to the terminal device, the control unit transmits information on a result of the determination to the network may be used.

A communication control method according to an embodiment of the present invention is a communication control method that is executed by a control unit included in a communication control device included in a communication system in which a terminal device communicates a frame free of any transmission source information via a network, wherein a detection device having a function of detecting a frame having a specific property, and a function of transmitting first information on the frame having a specific property to the network when the detection device detects a frame having a specific property is connected to the network, the control unit refers to a frame storage unit that stores a frame after transmission output from the terminal device to the network when the control unit determines that the first information has been received from the detection device connected to the network on the basis of information for determining being the first information transmitted by the detection device, and determines whether or not the frame having a specific property specified on the basis of the received first information is stored in the frame storage unit, and the first information includes information on content of the frame after transmission output from the terminal device to the network as it is or digest information of the frame after transmission.

A program according to an embodiment of the present invention is a program for causing a computer constituting a transmission control device included in a communication system in which a terminal device communicates a frame free of any transmission source information via a network that communicates the frame, a detection device having a function of detecting a frame having a specific property and a function of transmitting first information on the frame having a specific property to the network when the frame having a specific property has been detected being connected to the network, to realize a function of referring to a frame storage unit that stores a frame after transmission output from the terminal device to the network when it is determined that the first information has been received from the detection device connected to the network on the basis of information for determining being the first information transmitted by the detection device, and determining whether or not the frame having a specific property specified on the basis of the received first information is stored in the frame storage unit, wherein the first information includes information on content of the frame after transmission output from the terminal device to the network as it is or digest information of the frame after transmission.

### [Advantageous Effects of Invention]

According to the communication control device, the communication control method, and the program described above, it is possible to specify a terminal device that has transmitted a frame having a specific property such as an unauthorized frame.

### [Brief Description of Drawings]

FIG. 1 is a diagram illustrating a schematic configuration example of a communication system according to an embodiment (a first embodiment) of the present invention.
FIG. 2 is a diagram illustrating an example of a flow of a process that is performed in the communication system according to an embodiment (the first embodiment) of the present invention.
FIG. 3 is a diagram illustrating a schematic configuration example of a communication system according to a modification example of an embodiment (the first embodiment) of the present invention.
FIG. 4 is a diagram illustrating a schematic configuration example of a communication system according to an embodiment (a second embodiment) of the present invention.
FIG. 5 is a diagram illustrating an example of a flow of a process that is performed in a communication system according to an embodiment (the second embodiment) of the present invention.
FIG. 6 is a diagram illustrating a schematic configuration example of a communication system according to an embodiment (a third embodiment) of the present invention.
FIG. 7 is a diagram illustrating an example of a flow of a process that is performed in a communication system according to an embodiment (the third embodiment) of the present invention.
FIG. 8 is a diagram illustrating a schematic configuration example of a communication system according to a modification example of an embodiment (the third embodiment) of the present invention.
FIG. 9 is a diagram illustrating a schematic configuration example of a CAN system according to an embodiment (a fourth embodiment) of the present invention.
FIG. 10 is a diagram illustrating a schematic configuration example of a transfer and duplication device according to an embodiment (the fourth embodiment) of the present invention.
FIG. 11 is a diagram illustrating a schematic configuration example of a control device according to an embodiment (the fourth embodiment) of the present invention.
FIG. 12 is a diagram illustrating a schematic configuration example of a relay device according to an embodiment (the fourth embodiment) of the present invention.
FIG. 13 is a diagram illustrating a schematic configuration example of a management device according to an embodiment (the fourth embodiment) of the present invention.
FIG. 14 is a diagram illustrating a schematic configuration example of a frame of a CAN according to an embodiment (the fourth embodiment) of the present invention.
FIG. 15 is a diagram illustrating an example of ID allocation information of the CAN according to an embodiment (the fourth embodiment) of the present invention.
FIG. 16 is a diagram illustrating another example of the ID allocation information of the CAN according to an embodiment (the fourth embodiment) of the present invention.
FIG. 17 is a diagram illustrating an example of a hardware configuration of various processing devices according to an embodiment of the present invention.
FIG. 18 is a diagram illustrating a schematic configuration example of a communication system according to an embodiment (a fifth embodiment) of the present invention.
FIG. 19 is a diagram illustrating an example of a flow of a process that is performed in the communication system according to an embodiment (the fifth embodiment) of the present invention.
FIG. 20 is a diagram illustrating a schematic configuration example of a communication system according to an embodiment (a sixth embodiment) of the present invention.
FIG. 21 is a diagram illustrating an example of a flow of a process that is performed in the communication system according to an embodiment (the sixth embodiment) of the present invention.
FIG. 22 is a diagram illustrating a schematic configuration example of a communication system according to an embodiment (the seventh embodiment) of the present invention.
FIG. 23 is a diagram illustrating an example of a flow of a process that is performed in the communication system according to an embodiment (the seventh embodiment) of the present invention.

### DETAILED DESCRIPTION OF THE INVENTION

Embodiments of the present invention will be described in detail with reference to the drawings.

### (First embodiment)

### [Communication system]

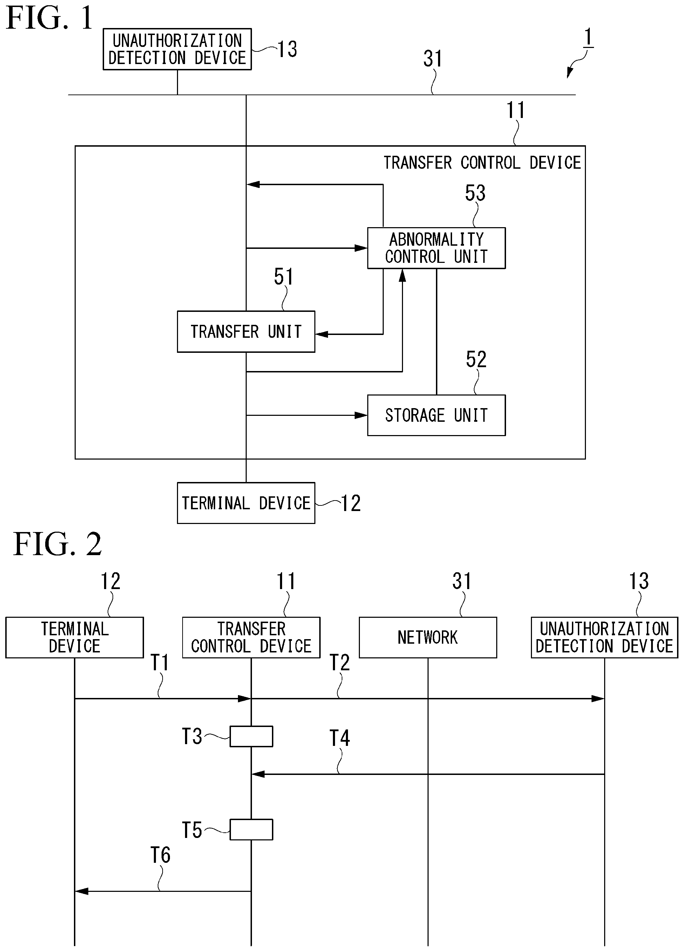

FIG. 1 is a diagram illustrating a schematic configuration example of a communication system 1 according to an embodiment of the present invention.

In the communication system 1 according to the first embodiment, a frame of a predetermined format is communicated.

The communication system 1 includes a transfer control device 11, a terminal device 12, an unauthorization detection device 13, and a network 31.

The transfer control device 11 and the terminal device 12 are communicatively connected, for example, directly.

The transfer control device 11 and the unauthorization detection device 13 are connected to the network 31, respectively.

It should be noted that, for example, wired communication may be performed or wireless communication may be performed as each communication.

The terminal device 12 outputs (transmits) a frame addressed to another device (not illustrated) connected to the network 31 to the transfer control device 11. The transfer control device 11 outputs (transmits), to the network 31, the frame input from the terminal device 12.

The transfer control device 11 outputs (transmits), to the terminal device 12, a frame input (received) from the network 31. The terminal device 12 determines whether or not the frame input (received) from the transfer control device 11 is a frame addressed to the own device (the terminal device 12), and performs a process on the frame addressed to the own device. It should be noted that the terminal device 12 also determines that a broadcast frame is a frame addressed to the own device.

The unauthorization detection device 13 acquires a frame flowing through the network 31 and determines whether or not the frame is an unauthorized frame (unauthorized frame). When there is a frame determined (detected) as an unauthorized frame, the unauthorization detection device 13 outputs (transmits) a frame including information on the frame (hereinafter also referred to as an "unauthorization notification frame") to the network 31. An unauthorization notification frame may be a broadcast frame. Unauthorization notification frames include, for example, information on content of an unauthorized frame that is a notification target as it is, or digest information of an unauthorized frame that is a notification target. The digest information of an unauthorized frame may be, for example, information on content of a part of an unauthorized frame as it is, or summary information of the content of an unauthorized frame.

### <Transfer control device>

The transfer control device 11 includes a transfer unit 51, a storage unit 52, and an abnormality control unit 53. The transfer unit 51 controls the transfer of frames between the terminal device 12 and the network 31. Specifically, the transfer unit 51 outputs (transfers) a frame input to the transfer control device 11 from the terminal device 12, to the network 31, and outputs (transfers) a frame input to the transfer control device 11 from the network 31, to the terminal device 12.

In the first embodiment, the transfer unit 51 does not transfer am unauthorization notification frame transmitted from the unauthorization detection device 13, and does not output an unauthorization notification frame to the terminal device 12.

The storage unit 52 temporarily stores the frame input to the transfer control device 11 from the terminal device 12. In the first embodiment, the storage unit 52 stores a predetermined number of frames with a new timing input to the transfer control device 11 from the terminal device 12, and deletes the oldest frame and stores a new frame each time a new frame is input.

The abnormality control unit 53 monitors the frame input to the transfer control device 11 from the network 31 and determines whether or not the frame is an unauthorization notification frame transmitted from the unauthorization detection device 13. When the abnormality control unit 53 determines (detects) that the frame is an unauthorization notification frame, the abnormality control unit 53 determines whether or not an unauthorized frame notified by an unauthorization notification frame is stored in the storage unit 52. In this case, the frames referred to by the abnormality control unit 53 may be, for example, all frames stored in the storage unit 52 or may be a predetermined number of frames from the latest frame.

When the abnormality control unit 53 determines (detects) that an unauthorized frame notified by an unauthorization notification frame is stored in the storage unit 52, the abnormality control unit 53 outputs, to the transfer unit 51, an instruction to stop the transfer of the frame in the transfer unit 51.

When the instruction is input from the abnormality control unit 53, the transfer unit 51 stops the transfer of the frame between the terminal device 12 and the network 31. As a preferable example, the transfer unit 51 stops all transfers immediately. For example, the transfer unit 51 interrupts the transfer using software. It should be noted that the terminal device 12 is not notified of the instruction.

Here, in order to prevent a frame transmitted from the terminal device 12 in which an abnormality has occurred from flowing to the network 31, the transfer unit 51 may stop the transfer of the frame in a direction from the terminal device 12 to the network 31. However, in the first embodiment, transfer of a frame in a direction from the network 31 to the terminal device 12 is also stopped, thereby improving security.

It should be noted that in the first embodiment, when there is a frame matching an unauthorized frame among frames output (transmitted) from the terminal device 12, the transfer control device 11 regards an abnormality as occurring in the terminal device 12.

In this case, the abnormality control unit 53, for example, may output (transmit) a frame including information indicating that there is an abnormality in the terminal device 12 (hereinafter also referred to as a "terminal abnormality notification frame") to the network 31. As this frame, for example, a broadcast frame may be used. Information for identifying the terminal device 12 in which an abnormality has occurred or information for identifying the transfer control device 11 that has determined an abnormality, for example, may be included in the terminal abnormality notification frame.

The unauthorization detection device 13, another terminal device (not illustrated), or another device (not illustrated) may receive the terminal abnormality notification frame via the network 31, and store history information such as a reception date and time of the terminal abnormality notification frame in a storage unit (not illustrated).

Further, the abnormality control unit 53 may determine that there is an abnormality in the terminal device 12 using another scheme.

For example, the transfer unit 51 outputs, to the abnormality control unit 53, the frame input to the transfer control device 11 from the terminal device 12. The abnormality control unit 53 determines (detects) that there is an abnormality in the terminal device 12 when the input frame matches a frame that can be transmitted by only the unauthorization detection device 13. An example of the frame that can be transmitted by only the unauthorization detection device 13 may include a unauthorization notification frame.

Here, the abnormality control unit 53 stores information for determining whether or not a frame is the frame that can be transmitted by only the unauthorization detection device 13. The frame may be defined (set) in advance or may be defined (set) at an arbitrary timing. The information may be identification information (ID) capable of specifying the frame.

As another example, the transfer unit 51 outputs, to the abnormality control unit 53, the frame input to the transfer control device 11 from the terminal device 12. When the input frame matches a frame that can be transmitted by only the abnormality control unit 53, the abnormality control unit 53 determines (detects) that there is an abnormality in the terminal device 12. Here, the abnormality control unit 53 stores information for determining whether or not a frame is the frame that can be transmitted by only the abnormality control unit 53. The frame, for example, may be defined (set) in advance or may be defined (set) at an arbitrary timing. The information may be identification information (ID) capable of specifying the frame.

### <Example of flow of process>

FIG. 2 is a diagram illustrating an example of a flow of a process that is performed in the communication system according to an embodiment (the first embodiment) of the present invention.

FIG. 2 illustrates the terminal device 12, the transfer control device 11, the network 31, and the unauthorization detection device 13.

The terminal device 12 outputs (transmits) a frame addressed to another device (not illustrated) connected to the network 31 to the transfer control device 11 (process T1).

The transfer control device 11 transfers the frame to the network 31 (process T2). The frame is received by the unauthorization detection device 13.

The transfer control device 11 stores the transferred frame (process T3).

When the unauthorization detection device 13 determines that the received frame is an unauthorized frame, the unauthorization detection device 13 transmits a unauthorization notification frame including information on the unauthorized frame to the network 31 (process T4). The unauthorization notification frame is received by the transfer control device 11.

The transfer control device 11 determines whether or not the unauthorized frame notified by the received unauthorization notification frame matches a frame stored in the own device (the transfer control device 11) (process T5).

When the transfer control device 11 determines that the unauthorized frame matches the stored frame, the transfer control device 11 stops the transfer between the terminal device 12 and the network 31 (process T6).

### [Communication system according to modification example]

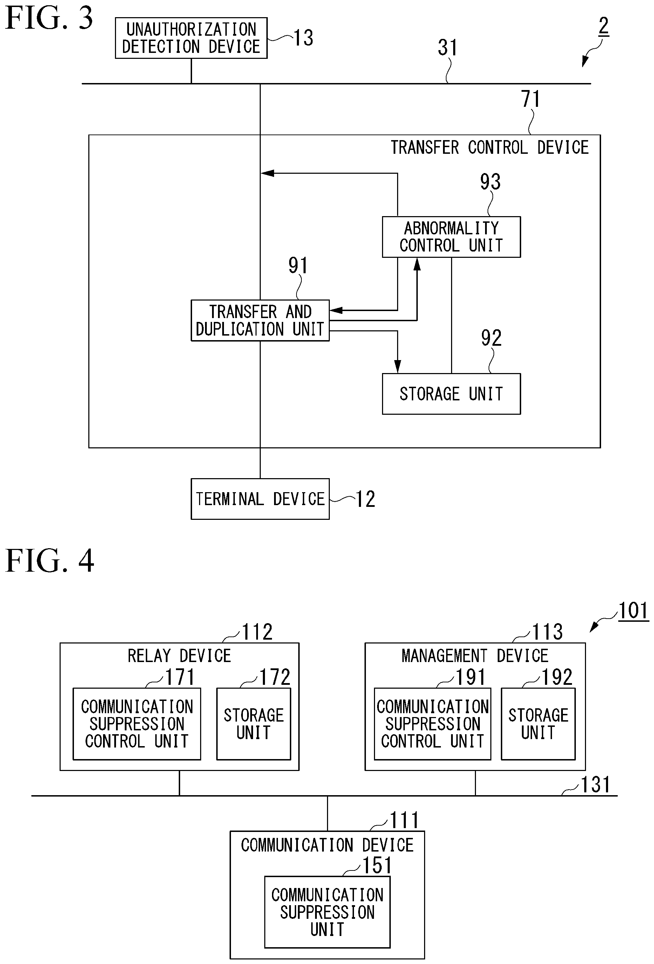

FIG. 3 is a diagram illustrating a schematic configuration example of a communication system 2 according to a modification example of an embodiment (the first embodiment) of the present invention.

The communication system 2 includes a transfer control device 71, a terminal device 12, a unauthorization detection device 13, and a network 31.

The transfer control device 71 includes a transfer and duplication unit 91, a storage unit 92, and an abnormality control unit 93.

The transfer control device 71 and the terminal device 12 are connected, for example, directly and communicatively.

Each of the transfer control device 71 and the unauthorization detection device 13 is connected to the network 31.

Here, in the present modification example, the configuration of the transfer control device 71 is different from that of the communication system 1 illustrated in FIG. 1, and other configurations are the same. Therefore, hereinafter, differences between the communication system 2 and the communication system 1 illustrated in FIG. 1 will be described in detail.

### <Transfer control device according to modification example>

Differences between the transfer control device 71 and the transfer control device 11 illustrated in FIG. 1 will be described. It should be noted that detailed description of the transfer control device 71 will be omitted for points the same as in the transfer control device 11 illustrated in FIG. 1.

The transfer control device 11 illustrated in FIG. 1 has a configuration in which a frame input to the transfer control device 11 from the terminal device 12 is input to each of the transfer unit 51 and the abnormality control unit 53, and a frame input to the transfer control device 11 from the network 31 is input to each of the transfer unit 51 and the abnormality control unit 53.

On the other hand, in the transfer control device 71 according to the modification example, a frame input from the terminal device 12 to the transfer control device 71 is input to the transfer and duplication unit 91, the frame is copied by the transfer and duplication unit 91, and the copied frame is input from the transfer and duplication unit 91 to the abnormality control unit 93. A frame input from the network 31 to the transfer control device 71 is input to the transfer and duplication unit 91, the frame is copied by the transfer and duplication unit 91, and the copied frame is input to the abnormality control unit 93 from the transfer and duplication unit 91.

Thus, the transfer and duplication unit 91 has a function of performing transfer and a function of performing duplicating. Here, the transfer and duplication unit 91 can also be regarded as an example of a transfer unit.

It should be noted that a function of the storage unit 92 and a function of the abnormality control unit 93 are the same as those of the transfer control device 11 illustrated in FIG. 1, except for matters regarding such differences.

### [Conclusions for first embodiment]

As described above, in the communication system 1 according to the first embodiment, the transfer control device 11 can determine a state of communication between the terminal device 12 and the network 31 and control whether or not communication is possible on the basis of an instruction (in the first embodiment, a unauthorization notification frame) from an external device (the unauthorization detection device 13 in the first embodiment). For example, the transfer control device 11 can interrupt communication when the transfer control device 11 determines that there is an abnormality in the terminal device 12. Accordingly, for example, when an abnormality occurs in the terminal device 12, or when another unauthorized terminal device is connected to the transfer control device 11 on the terminal device 12 side, the transfer control device 11 can interrupt abnormal communication or unauthorized communication. By interrupting abnormal communication or unauthorized communication as described above, it is possible to prevent problems from spreading to the entire communication system 1.

Further, in the communication system 1 according to the first embodiment, it is possible to store and manage, for example, information for identifying the terminal device 12 in which an abnormality has occurred or information for identifying the transfer control device 11 in which an abnormality has occurred. Accordingly, in the communication system 1 according to the first embodiment, it is possible to specify the device 12 in which an abnormality has occurred or the transfer control device 11 that has determined the abnormality.

Here, in the first embodiment, for example, the transfer control device 11 looks like an independent terminal device as viewed from the network 31.

Further, in the first embodiment, the transfer control device 11 looks like a transmission type proxy between the terminal device 12 and the network 31.

It should be noted that in the first embodiment, a configuration in which one terminal device 12 is connected to one transfer control device 11 is shown, whereas as another configuration example, a configuration in which a plurality of terminal devices 12 are connected to one transfer control device 11 may be used. In this configuration, the transfer control device 11 has, for example, a function of performing the same process as that of the first embodiment on each of the plurality of terminal devices 12 connected to the transfer control device.

### <Configuration example>

For example, it is possible to implement a transfer control device.

As a configuration example, there is provided a transfer control device (the transfer control device 11 in the example of FIG. 1 or the transfer control device 71 in the example of FIG. 3) that controls transfer of a frame between a network (the network 31 in the examples of FIGS. 1 and 3) that communicates a frame free of any transmission source information (information indicating a transmission source) and a terminal device (the terminal device 12 in the examples of FIGS. 1 and 3), the transfer control device including a control unit (the abnormality control unit 53 in the example of FIG. 1 or the abnormality control unit 93 in the example of FIG. 3) that refers to a frame storage unit (the storage unit 52 in the example of FIG. 1 or the storage unit 92 in the example of FIG. 3) that stores a frame that is a transfer target output from the terminal device to the network when the control unit receives information (an unauthorization notification frame in the first embodiment) on the frame having a specific property (an unauthorized frame in the first embodiment) from the network, and determines whether or not the frame having a specific property specified on the basis of the received information is stored in the frame storage unit.

As a configuration example, in the transfer control device, when the control unit determines that the frame having a specific property is stored in the frame storage unit, the control unit stops part or all of the transfer.

As a configuration example, in the transfer control device, when the control unit determines that the frame having a specific property is stored in the frame storage unit, the control unit transmits information on a result of the determination (in the first embodiment, a terminal abnormality notification frame) to the network.

As a configuration example, in the transfer control device, the information on a result of the determination is not transmitted to the terminal device.

As a configuration example, in the transfer control device, information on the frame having a specific property is not transmitted to the terminal device.

As a configuration example, in the transfer control device, when a frame matching a frame defined to be transmitted by a device (the unauthorization detection device 13 in the examples of FIGS. 1 and 3) transmitting information on the frame having a specific property is transmitted from the terminal device, the control unit determines an abnormality in the terminal device.

As a configuration example, in the transfer control device, when a frame matching a frame defined to be transmitted by the control unit is transmitted from the terminal device, the control unit determines an abnormality in the terminal device.

As a configuration example, the transfer control device includes a transfer unit (the transfer unit 51 in the example in FIG. 1 or the transfer and duplication unit 91 in the example of FIG. 3) that performs the transfer.

As a configuration example, the transfer control device includes the frame storage unit.

As a configuration example, in the transfer control device, the frame having a specific property is an unauthorized frame. It should be noted that a frame having a specific property is not limited to an unauthorized frame, and a frame having various other properties may be used.

For example, it is possible to implement a transfer control method.

As a configuration example, in a transfer control method (a method of transfer control performed in the transfer control device 11 of the communication system 1 in the example of FIG. 1 or a method of transfer control performed in the transfer control device 71 of the communication system 2 in the example of FIG. 3) that controls transfer of a frame free of any source information between a network that communicates the frame and a terminal device, the transfer control method includes referring to, using a control unit, a frame storage unit that stores a frame that is a transfer target output from the terminal device to the network when the control unit receives information on the frame having a specific property from the network, and determining whether or not the frame having a specific property specified on the basis of the received information is stored in the frame storage unit.

For example, it is possible to implement a program.

As a configuration example, a program causes, a computer constituting a transfer control device that controls transfer of a frame free of any source information between a network that communicates the frame and a terminal device to realize a function of referring to a frame storage unit that stores a frame that is a transfer target output from the terminal device to the network when information on the frame having a specific property is received from the network, and determining whether or not the frame having a specific property specified on the basis of the received information is stored in the frame storage unit.

### (Second embodiment)

### [Communication system]

FIG. 4 is a diagram illustrating a schematic configuration example of a communication system 101 according to an embodiment (a second embodiment) of the present invention.

In the communication system 101 according to the embodiment, a frame of a predetermined format is communicated.

The communication system 101 includes a communication device 111, a relay device 112, a management device 113, and a network 131.

Each of the communication device 111, the relay device 112, and the management device 113 are connected to the network 131.

It should be noted that as each communication, for example, wired communication may be performed or wireless communication may be performed.

Here, identification information (hereinafter also referred to as a "destination ID") representing a destination is included in some of the respective frames. The destination ID is also used as information indicating a priority. In the second embodiment, an integer value equal to or greater than 0 is used as the destination ID. Further, in the second embodiment, it is determined that the priority is higher when a value of the destination ID is smaller.

In the second embodiment, a configuration in which, when two different frames including destination IDs having different values collide with each other on a communication path, communication of the frame having a smaller destination ID (that is, the frame having a higher priority) is continued, and communication of the frame having the greater destination ID (that is, the frame having a lower priority) is interrupted (canceled) is adopted.

In the second embodiment, a destination ID having a value of 0 is not assigned as a destination ID to any device in the communication system 101.

The communication device 111, the relay device 112, or the like transmits a frame including a destination ID having a value of 0 (hereinafter also referred to as a "communication suppression frame") to cause the communication suppression frame and another frame (a frame other than the communication suppression frame) to collide with each other such that the communication of the other frame can be interrupted.

It should be noted that the communication suppression frame, for example, may include a payload or may not include the payload. In a configuration in which the payload is not included in the communication suppression frame, the amount of data of the communication suppression frame can be reduced as compared with a configuration in which the payload is included in the communication suppression frame.

### <Communication device>

The communication device 111 communicates a frame with another device (not illustrated) via the network 131.

For example, the communication device 111 outputs (transmits) a frame addressed to the other device to the network 131.

In addition, the communication device 111 inputs (receives) a frame output (transmitted) from the other device via the network 131. The communication device 111 determines whether or not the input (received) frame is a frame addressed to the own device (the communication device 111), and performs a process on a frame addressed to the own device. It should be noted that the communication device 111 also determines that the broadcast frame is also a frame addressed to the own device.

The communication device 111 includes a communication suppression unit 151.

The communication suppression unit 151 outputs (transmits) the communication suppression frame to the network 131. The communication suppression frame is received by the relay device 112.

### <Relay device>

The relay device 112 relays communication of frames flowing through the network 131. For example, the relay device 112 receives a frame addressed to another device from the communication device 111 via the network 131, and transmits the frame to the network 131. Similarly, for other frames, the relay device 112 relays communication of the frames.

The relay device 112 includes a communication suppression control unit 171 and a storage unit 172.

The communication suppression control unit 171 outputs (transmits) the communication suppression frame to the network 131.

When the relay device 112 outputs a communication suppression frame using the communication suppression control unit 171, the relay device 112 stores information on the communication suppression frame in the storage unit 172. Information on a date and time at which the communication suppression frame is output (hereinafter also referred to as "date and time information A1") is included in the information on the communication suppression frame.

Further, when the relay device 112 receives the communication suppression frame (for example, the communication suppression frame transmitted from the communication device 111) from the network 131, the relay device 112 stores information on the communication suppression frame in the storage unit 172. Information on a date and time when the communication suppression frame has been received (hereinafter also referred to as "date and time information A2") is included in the information on the communication suppression frame.

The communication suppression control unit 171 outputs (transmits), to the network 131, a frame including the same information as the information stored in the storage unit 172 or information related to the information stored in the storage unit 172 (hereinafter also referred to as a "communication suppression notification frame") addressed to the management device 113. The date and time information A1 or the date and time information A2 is included in the information included in the communication suppression notification frame.

### <Management device>

The management device 113 performs various types of management in the communication system 101.

For example, the management device 113 stores various types of information in the communication system 101. The information may be, for example, information on an event occurred in the communication system 101, and in this case, a history (for example, a log) of the information can be stored and retained.

The management device 113 includes a communication suppression control unit 191 and a storage unit 192.

The communication suppression control unit 191 receives the communication suppression notification frame transmitted from the relay device 112, via the network 131. The communication suppression control unit 191 stores the information included in the received communication suppression notification frame in the storage unit 192. The information on the communication suppression frame output from the relay device 112 or information on the communication suppression frame received by the relay device 112 is included in the information, and date and time information A1 or date and time information A2 is included in the information. Here, the management device 113 may be, for example, a server (a management server) that stores such information.

### <Example of flow of process>

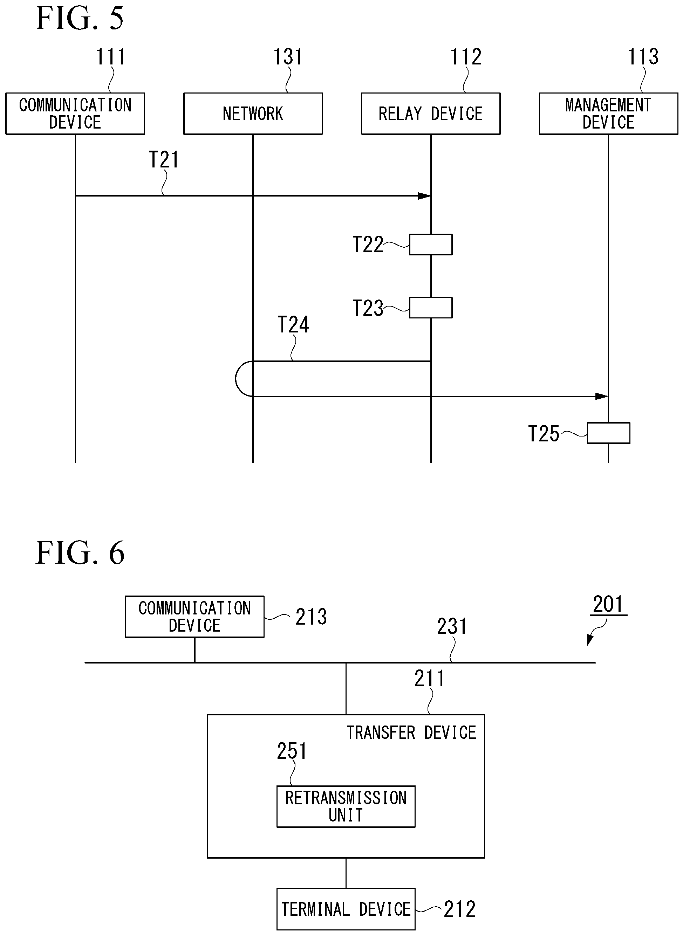

FIG. 5 is a diagram illustrating an example of a flow of a process that is performed in the communication system 101 according to an embodiment (a second embodiment) of the present invention.

FIG. 5 illustrates the communication device 111, the network 131, the relay device 112, and the management device 113.

The communication device 111 transmits a communication suppression frame to the network 131 in order to suppress arrival of a frame transmitted from another device (the relay device 112, the management device 113, or other devices) connected to the network 131 at the own device (the communication device 111) (process T21). The communication suppression frame is received by the relay device 112 from the network 131.

When the relay device 112 determines that the received frame is the communication suppression frame (process T22), the relay device 112 stores information on the communication suppression frame in the storage unit 172 (process T23). Further, when the relay device 112 transmits the communication suppression frame (process T22), the relay device 112 stores information on the communication suppression frame in the storage unit 172 (process T23). In addition, in these cases, the relay device 112 transmits, to the network 131, a communication suppression notification frame addressed to the management device 113 (process T24).

The management device 113 receives the communication suppression notification frame from the relay device 112 via the network 131. The management device 113 stores the information included in the received communication suppression notification frame in the storage unit 192 (process T25).

### [Configuration of frame according to modification example]

In the embodiment, a configuration in which the frame including the destination ID having a highest priority and a value of 0 among the destination IDs having a value equal to or greater than 0 is used as the communication suppression frame has been adopted.

As another configuration example, a configuration in which a frame including a destination ID having a highest priority and a value of 0 is used as a frame for emergency (hereinafter also referred to as an "emergency frame"), and a frame including a destination ID having a second highest priority and a value of 1 is used as the communication suppression frame can be adopted. In this configuration, the emergency frame is communicated with the highest priority, and the communication suppression frame is communicated with a lower priority than the emergency frame and a higher priority than frames other than the emergency frame. It should be noted that, in this configuration, the priority (0) of the emergency frame and the priority (1) of the communication suppression frame are not assigned as the destination ID to any device in the communication system 101.

### [Conclusions for second embodiment]

As described above, in the communication system 101 according to the second embodiment, the management device 113 can manage information such as a date and time for the communication suppression frame transmitted from the communication device 111 or the relay device 112. For example, in a case in which a communication suppression frame is transmitted when any abnormality occurs in the communication device 111, the relay device 112, or the like, the management device 113 can store and retain information on the abnormality as a log or the like. This information may be used for analysis of abnormality, or the like.

For example, abnormality analysis or the like may be performed on the basis of the information stored in the management device 113 or on the basis of information other than such information. The other information may be, for example, information stored in another device provided in the communication system 101.

It is considered that there is a case in which it is possible to ascertain overall problems or the like in the communication system 101 through such analysis.

It should be noted that when a communication suppression frame with a high priority is transmitted, a congestion frame with a lower priority is delayed, but it is considered that it is good if there is no problem in practical use.

### <Configuration example>

For example, it is possible to implement a communication method.

As a configuration example, provided is a communication method (a method of communication that is performed in the communication system 101 in the example of FIG. 4), wherein a network (the network 131 in the example of FIG. 4)) that communicates a frame including identification information (ID) that is used for designation of a destination of a communication device (the communication device 111 in the example of FIG. 4) and determines a priority of communication, the frame including the identification information not assigned to a destination of any one of the communication devices and having a higher priority than any of the communication devices is used as a communication suppression frame for suppressing communication of the frame, a relay device (the relay device 112 in the example of FIG. 4) connected to the network stores information on a communication date and time of the communication suppression frame in a first storage unit (the storage unit 172 of the relay device 112 in the example of FIG. 4), and transmits the information to a management device (the management device 113 in the example of FIG. 4) connected to the network, and the management device stores the information received from the relay device in a second storage unit (the storage unit 192 of the management device 113 in the example of FIG. 4).

As a configuration example, in the communication method, when the relay device connected to the network transmits the communication suppression frame, the information on transmission date and time of the communication suppression frame is set as information on the communication date and time.

As a configuration example, in the communication method, when the relay device connected to the network receives the communication suppression frame, the information on the reception date and time of the communication suppression frame is set as the information on the communication date and time.

For example, it is possible to implement a communication system.

As a configuration example, provided is a communication system (the communication system 101 in the example of FIG. 4) connected to the network that communicates a frame including identification information that is used for designation of a destination of a communication device and determines a priority of communication, wherein the frame including the identification information not assigned to a destination of any one of the communication devices and having a higher priority than any of the communication devices is used as the communication suppression frame for suppressing communication of the frame, the relay device connected to the network stores information on a communication date and time of the communication suppression frame in the first storage unit, and transmits the information to the management device connected to the network, and the management device stores the information received from the relay device in the second storage unit.

### (Third embodiment)

### [Communication system]

FIG. 6 is a diagram illustrating a schematic configuration example of a communication system 201 according to an embodiment (a third embodiment) of the present invention.

The communication system 201 includes a transfer device 211, a terminal device 212, a communication device 213, and a network 231.

The transfer device 211 and the terminal device 212 are connected, for example, directly and communicatively.

Each of the transfer device 211 and the communication device 213 is connected to the network 231.

It should be noted that as each communication, for example, wired communication may be performed or wireless communication may be performed.

The terminal device 212 outputs (transmits), to the transfer device 211, a frame addressed to another device (in the example of FIG. 6, for example, the communication device 213) connected to the network 231. The transfer device 211 outputs (transmits) the frame input from the terminal device 212, to the network 231. The frame is received by the other device.

The communication device 213 outputs (transmits), to the network 231, a frame addressed to another device (for example, the terminal device 212 in the example of FIG. 6) connected to the network 231. The frame is input (received) by the transfer device 211.

The transfer device 211 outputs (transmits) the frame input (received) from the network 231, to the terminal device 212. The frame is, for example, a frame output (transmitted) from the communication device 213 to the network 231.

The terminal device 212 determines whether or not the frame input (received) from the transfer device 211 is a frame addressed to the own device (the terminal device 212), and performs a process on a frame addressed to the own device. It should be noted that the terminal device 212 also determines that a broadcast frame is a frame addressed to the own device.

### <Transfer device>

The transfer device 211 includes a retransmission unit 251.

The retransmission unit 251 controls retransmission of a frame.

As an example, in a case in which the retransmission unit 251 has determined that the transmission of the frame has failed when the frame input to the transfer device 211 from the terminal device 212 is transmitted (transferred) to the network 231, the retransmission unit 251 performs the transmission of the frame again (that is, performs retransmission of the frame).

The transfer device 211 stores the information on the frame in a storage unit (not illustrated) until it is determined that the transmission of the frame has been successful or until the retransmission of the frame is abandoned and the retransmission is stopped. It should be noted that a condition for abandoning the retransmission of the frame may be arbitrary and, for example, a condition that the retransmission of the frame is not successful even when the retransmission of the frame is performed a predetermined number of times may be used.

Here, in the third embodiment, when the terminal device 212 or the communication device 213 normally receives the frame addressed to the own device (the terminal device 212 or the communication device 213), the terminal device 212 or the communication device 213 outputs (transmits) a frame including ACK (hereinafter referred to as "ACK") to the network 231.

It should be noted that transmission of a response frame (ACK) from the terminal device 212 may be performed, for example, in the transfer device 211.

When the retransmission unit 251 receives the ACK in response to the frame in a case in which the retransmission unit 251 transmits the frame, the retransmission unit 251 determines that the transmission of the frame has been successful.

On the other hand, when the retransmission unit 251 cannot receive the ACK in response to the frame or when there is no response to the frame in a case in which the retransmission unit 251 transmits the frame, the retransmission unit 251 determines that the transmission of the frame has failed.

It should be note that such a determination (the determination as to success or failure of frame transmission) may also be performed in the terminal device 212 or the communication device 213. Through such a determination, completion of the transmission of the frame (whether or not the transmission of the frame has been completed) is determined.

In the transfer device 211, when the retransmission unit 251 retransmits, to the network 231, the frame input from the terminal device 212, the retransmission unit 251 suppresses a frame that is input to the transfer device 211 from the terminal device 212.

Here, any scheme may be used as a scheme of suppressing a frame that is output from the terminal device 212 to the transfer device 211. For example, the retransmission unit 251 may output (transmit), to the terminal device 212, a predetermined frame for suppressing a frame that is output from the terminal device 212 to the transfer device 211. As the predetermined frame, for example, the same frame as the communication suppression frame according to the second embodiment may be used.

Further, as another scheme for suppressing a frame that is output from the terminal device 212 to the transfer device 211, for example, the retransmission unit 251 outputs (transmits), to the terminal device 212 (the device that is a transmission source), a signal representing an instruction for suppressing (for example, stopping) the frame that is output from the terminal device 212 (the device that is a transmission source) to the transfer device 211. In this case, the terminal device 212 (a device that is a transmission source) suppresses (for example, stops) a frame to be output to the transfer device 211 in response to reception of the signal.

As another example, in a case in which the retransmission unit 251 has determined that the transmission of the frame has failed when the frame input to the transfer device 211 from the network 231 is transmitted (transferred) to the terminal device 212, the retransmission unit 251 performs the transmission of the frame again (that is, performs retransmission of the frame). The transfer device 211 stores the information on the frame in a storage unit (not illustrated) until it is determined that the transmission of the frame has been successful or until the retransmission of the frame is abandoned and the retransmission is stopped.

In the transfer device 211, when the retransmission unit 251 retransmits, to the terminal device 212, a frame input from the network 231, the retransmission unit 251 suppresses a frame that is input from the network 231 to the transfer device 211.

Here, in the third embodiment, the retransmission unit 251 includes a storage unit (not illustrated) that stores frames to be retransmitted. For example, in the transfer device 211, when the communication is completely synchronized between the terminal device 212 and the network 231, the retransmission may be possible even when the storage unit is not included, but when the communication is not completely synchronized, it can be considered that a configuration in which the storage unit is included and used as a buffer is preferable.

Further, the retransmission unit 251 may separately include a storage unit that stores a frame flowing from the terminal device 212 to the network 231, and a storage unit that stores a frame flowing from the network 231 to the terminal device 212.

Further, in the third embodiment, the transfer device 211 has a function of congestion control. For example, the transfer device 211 has a function of adjusting a timing at which a frame that is a relay (transfer) target is output (transmitted), and a function of trying to complete transmission of a frame received as a relay (transfer) target as much as possible. Further, the transfer device 211 has, for example, a function of performing control so that a frame to be received is newly generated when there remain frames that have not been transmitted. Through such congestion control, it may be possible to reduce the number of frames that disappear without being communicated.

### <Example of flow of process>

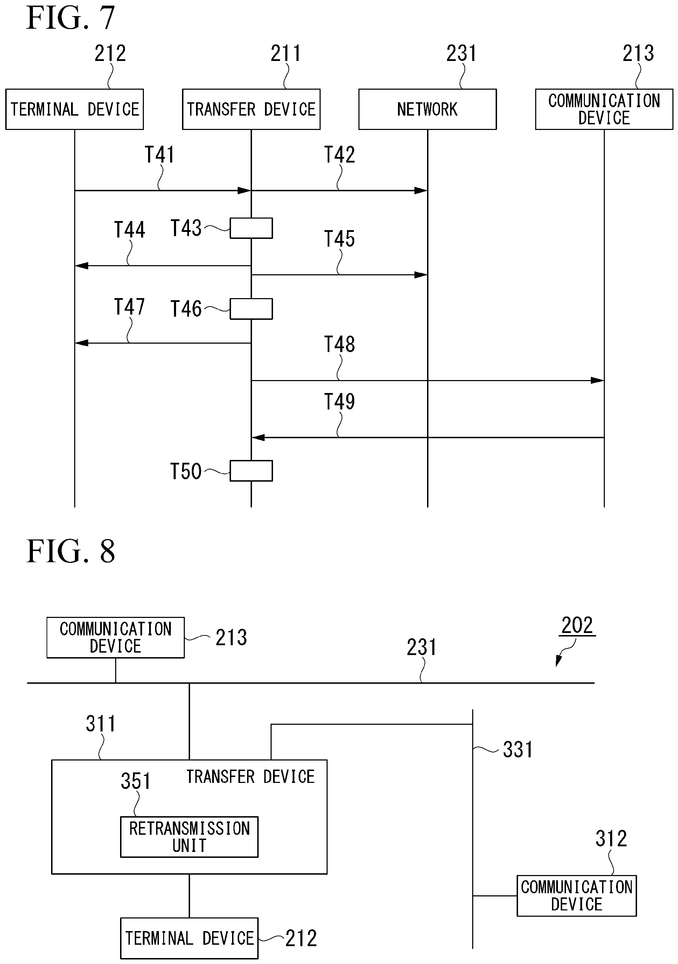

FIG. 7 is a diagram illustrating an example of a flow of a process that is performed in the communication system 201 according to an embodiment (the third embodiment) of the present invention.

FIG. 7 illustrates the terminal device 212, the transfer device 211, the network 231, and the communication device 213.

The terminal device 212 transmits, to the transfer device 211, a frame addressed to the communication device 213 (process T41).

The transfer device 211 transfers, to the network 231, a frame input from the terminal device 212 (process T42).

The transfer device 211, for example, detects (determines) that the transfer of the frame has failed (process T43).

In response to the detection of the failure of the transfer of the frame, the transfer device 211 performs control to suppress the number of frames input to the transfer device 211 from the terminal device 212 (process T44). Here, for a degree of suppressing the number of frames input to the transfer device 211 from the terminal device 212, for example, the number of frames is 0 in a preferable configuration example, but other configurations may be used.

The transfer device 211 retransmits the frame of which the failure of the transfer has been detected to the network 231 (process T45).

The transfer device 211, for example, detects (determines) that the transfer of the frame has failed (process T46).

In response to the detection of the failure of the transfer of the frame, the transfer device 211 performs control to suppress the number of frames input to the transfer device 211 from the terminal device 212 (process T47). It should be noted that this control is continuously performed as it is, for example, when the control is continuously performed in process T44.

The transfer device 211 retransmits the frame in which the failure of the transfer has been detected, to the network 231 (process T48).

When the frame retransmitted from the transfer device 211 is normally received by the communication device 213, the communication device 213 transmits an ACK to the network 231 (process T49).

In this case, the transfer device 211 detects (determines) the transfer of the frame is successful in response to the reception of the ACK (process T50).

Here, in the example of FIG. 7, the number of retransmissions, a timing at which retransmission fails, a timing at which retransmission is successful, and the like are examples, and there may be various other cases.

Further, the case in which the frame is transmitted from the terminal device 212 to the network 231 has been described in the example of FIG. 7, but the same applies to a case in which a frame is transmitted from the network 231 to the terminal device 212 as another example.

### [Communication system according to modification example]

FIG. 8 is a diagram illustrating a schematic configuration example of a communication system 202 according to a modification example of an embodiment (the third embodiment) of the present invention.

The communication system 202 includes a transfer device 311, a terminal device 212, a communication device 213, a network 231, another communication device 312, and another network 331.

The transfer device 311 and the terminal device 212 are connected, for example, directly and communicatively.

Each of the transfer device 311 and the communication device 213 are connected to the network 231.

Further, each of the transfer device 311 and the communication device 312 is connected to the network 331.

It should be noted that as each communication, for example, wired communication may be performed or wireless communication may be performed.

Here, in the present modification example, another network 331 is connected to the transfer device 311, a configuration of the transfer device 311 is different from that in the communication system 201 illustrated in FIG. 6, and other configurations are the same as those in the communication system 201 illustrated in FIG. 6. Therefore, hereinafter, a difference between the communication system 202 and the communication system 201 illustrated in FIG. 6 will be described in detail.

### <Transfer device according to modification example>

A difference between the transfer device 311 and the transfer device 211 illustrated in FIG. 6 will be described. It should be noted that detailed description of the same points between the transfer device 311 and the transfer device 211 illustrated in FIG. 6 will be omitted.

The transfer device 211 illustrated in FIG. 6 is connected to one network 231.

On the other hand, the transfer device 311 according to the present modification example is connected to the two networks 231 and 331. Therefore, there may be a case in which the transfer device 311 according to the present modification example transfers a frame input from the terminal device 212, to the network 231, a case in which the transfer device 311 transfers a frame input from the network 231, to the terminal device 212, a case in which the transfer device 311 transfers a frame input from the terminal device 212, to the other network 331, and a case in which the transfer device 311 transfers a frame input from the other network 331, to the terminal device 212.

It should be noted that, in the third embodiment, an operation that is performed by the network 231 and the communication device 213 is the same as an operation that is performed by the other network 331 and the other communication device 312.

The transfer device 311 includes a retransmission unit 351.

When the retransmission unit 351 retransmits to the network 231 the frame input from the terminal device 212 and when retransmission unit 351 retransmits to the other network 331 the frame input from the terminal device 212, the retransmission unit 351 controls the number of frames that are input from the terminal device 212 to the transfer device 311.

Further, when the retransmission unit 351 retransmits to the terminal device 212 the frame input from the network 231, the retransmission unit 351 performs control to suppress the number of frames that are input from the network 231 to the transfer device 311.

When the retransmission unit 351 retransmits to the terminal device 212 the frame input from the other network 331, the retransmission unit 351 performs control to suppress the number of frames that are input from the other network 331 to the transfer device 311.

Thus, when the transfer device 311 according to the present modification example is connected to the plurality of networks 231 and 331, the transfer device 311 can perform control of retransmission (including frame suppression control) on each of the networks 231 and 331.

Here, in the present modification example, the two different networks 231, 331 are connected to the transfer device 311, whereas as another configuration example, even when three or more different networks are connected to the transfer device 311, the transfer device 311 can perform control of retransmission (including control of suppression of frames) on each network.

Thus, three or more objects (devices or networks) may be connected to one transfer device 311, and in this case, the transfer device 311 may have a routing function among the three or more devices. In the routing function, for example, routing of a frame may be performed on the basis of a destination ID included in the frame.

### [Conclusions for third embodiment]

As described above, in the communication system 201 according to the third embodiment, when the transfer device 211 receives a frame that is a transfer target from a communication medium that is a transfer source and transmits the frame to a communication medium that is a transfer destination, the transfer device 211 stops a frame that is input to the transfer device 211 from the transfer source during retransmission when the retransmission occurs. Accordingly, the transfer device 211 can efficiently perform the retransmission of the frame.

Here, the transfer device 211 according to the third embodiment may be configured, for example, as a network control device that is not an end point. The network control device may be, for example, a switch of Ethernet (registered trademark).

Further, a configuration in which the same function as that of the transfer device 211 according to the third embodiment is included in a gateway (for example, a relay device connected to the network 231) other than the transfer device may be used.

Further, various communication media may be used as the communication medium connected to the transfer device 211. For example, a communication terminal (a terminal device), a network, or a transfer device other than the own device (the transfer device 211) may be used.

### <Configuration example>

For example, it is possible to implement a transfer device.

As a configuration example, provided is a transfer device (the transfer device 211 in the example of FIG. 6 or the transfer device 311 in the example of FIG. 8) that transfers a frame between a first communication medium (the terminal device 212 or the network 231 in the examples of FIGS. 6 and 8) and the second communication medium (the network 231 or the terminal device 212 in the examples of FIGS. 6 and 8), wherein the transfer device includes a retransmission unit (the retransmission unit 251 in the example in FIG. 6 or the retransmission unit 351 in the example of FIG. 7) that performs retransmission of the frame when a failure of the transfer of the frame from the first communication medium to the second communication medium is determined, and the retransmission unit suppresses communication of another frame from the first communication medium to the second communication medium in a period in which the retransmission of the frame is performed.

As a configuration example, in the transfer device, the retransmission unit determines completion of transmission of the frame with respect to the transfer of the frame from the first communication medium to the second communication medium.

As a configuration example, in the transfer device, the retransmission unit transmits a predetermined frame (the communication suppression frame in third the embodiment) to the first communication medium to suppress communication of the other frame from the first communication medium to the second communication medium.

For example, it is possible to implement a transfer method.

As a configuration example, there is provided a transfer method of transferring a frame between the first communication medium and the second communication medium (the transfer method performed in the transfer device 211 of the communication system 201 in the example of FIG. 6 or the method of transfer performed in the transfer device 311 of the communication system 202 in the example of FIG. 8), wherein the transfer method includes performing retransmission of the frame and suppressing communication of another frame from the first communication medium to the second communication medium in a period in which the retransmission of the frame is suppressed, when it is determined that the transfer of the frame from the first communication medium to the second communication medium has failed.

For example, it is possible to implement a program.

As a configuration example, there is provided a program for causing a computer constituting a transfer device that transfers a frame between a first communication medium and a second communication medium to realize a function of performing retransmission of the frame and suppressing communication of another frame from the first communication medium to the second communication medium in a period in which the retransmission of the frame is suppressed, when it is determined that the transfer of the frame from the first communication medium to the second communication medium has failed.

### (Fourth embodiment)

In a fourth embodiment, a case in which the configurations of the embodiments described above (the first embodiment to the third embodiment) are applied to the communication system of the CAN (a CAN system) is shown.

### [Communication system of CAN]

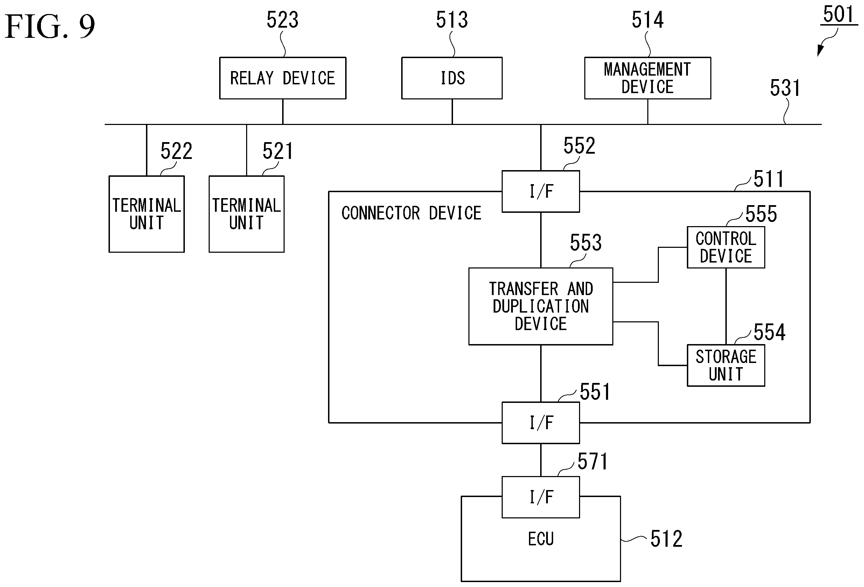

FIG. 9 is a diagram illustrating a schematic configuration example of a CAN system 501 according to an embodiment (the fourth embodiment) of the present invention.

The CAN system 501 according to the fourth embodiment communicates a frame of a predetermined format. Although the predetermined format is based on the format of the CAN, the predetermined format may differ from the format of the CAN in that the predetermined format differs from a format of the CAN to be described in the fourth embodiment. Further, the predetermined format may be the same as the format of the CAN in that the predetermined format is not particularly described in the fourth embodiment.

The CAN system 501 includes a connector device 511, an electronic control unit (ECU) 512 that is a terminal device, an intrusion detection system (IDS) 513, a management device 514, terminal units 521 to 522, a relay device 523, and a bus 531 of the CAN that is a network.

Here, the connector device 511, the IDS 513, the management device 514, the respective terminal units 521 to 522, and the relay device 523 are connected to the bus 531 and can communicate with each other via the bus 531.

It should be noted that as each communication, for example, wired communication may be performed or wireless communication may be performed.

The ECU 512 includes an interface (I/F) 571 that is communicatively connected to an external device. In the fourth embodiment, the ECU 512 is communicatively connected to the connector device 511 which is an external device via the interface 571.

The ECU 512 outputs (transmits), to the connector device 511, a frame addressed to the other ECU (an ECU included in any of the terminal units 521 to 522 in the example of FIG. 9) connected to the bus 531.

The ECU 512 determines whether or not the frame input (received) from the connector device 511 is a frame addressed to the own device (the ECU 512), and performs a process on the frame addressed to the own device.

It should be noted that an example of the frame addressed to the own device (the ECU 512) includes a frame in which a destination of the own device has been designated, and the same applies to a broadcast frame.

The terminal unit 521 is a constituent unit in which another ECU (not illustrated) and another connector unit (not illustrated) are connected, and the other connector unit is connected to the bus 531.

Similarly, the terminal unit 522 is a constituent unit to which still another ECU (not illustrated) and still another connector device (not illustrated) are connected, and the still another connector device is connected to the bus 531.

Here, although the two terminal units 521 and 522 are shown in the fourth embodiment, any number of terminal units may be connected to the bus 531.

Further, in the fourth embodiment, a configuration in which each of the terminal units 521 to 522 includes one ECU and one connector device has been adopted, whereas as another configuration example, some or all of the terminal units 521 to 522 may be one ECU without the connector device, and in this case, the ECU is connected to the bus 531.

The connector device 511 outputs (transmits) the frame input from the ECU 512, to the bus 531.

The connector device 511 outputs (transmits) the frame input (received) from the bus 531, to the ECU 512.

Further, the connector device 511 performs predetermined control with respect to, for example, a process of transferring a frame between the ECU 512 and the bus 531.

The IDS 513 acquires a frame flowing through the bus 531 and determines whether or not the frame is an unauthorized frame (unauthorized frame). When there is a frame determined (detected) to be the unauthorized frame, the IDS 513 outputs (transmits) a frame including information on the frame (also referred to as a "unauthorization notification frame") to the bus 531. The unauthorization notification frame may be a broadcast frame.

Here, when a plurality of connector devices (the connector device 511 and the other connector device) are connected to the bus 531, the unauthorization notification frame, which is transmitted from the IDS 513, having a high communication priority and the same communication priority, for example, is better for each of the connector devices. For example, broadcasting may be used.

It should be noted that, as another configuration example, an intrusion prevention system (IPS) having a function of detecting an intrusion and preventing the intrusion may be used instead of the IDS 513 having a function of detecting an intrusion.

In the fourth embodiment, the relay device 523 is a gateway.

The relay device 523 relays communication of frames flowing through the network 531. For example, the relay device 523 receives a frame addressed to another ECU from the ECU 512 via the bus 531, and transmits the frame to the bus 531. Similarly, for other frames, the relay device 523 relays communication of the frames.

In addition, the relay device 523 performs predetermined control regarding suppression of communication.

The management device 514 performs various types of management in the CAN system 501.

For example, the management device 514 stores various types of information in the CAN system 501. The information may be, for example, information on an event that has occurred in the CAN system 501 and, in this case, a history of the information can be stored and retained.

### <Connector device>

The connector device 511 includes two interfaces (I/F) 551 and 552, a transfer and duplication device 553, a storage unit 554, and a control device 555.

One interface 551 is connected to the interface 571 of the ECU 512. Accordingly, in the fourth embodiment, the connector device 511 and the ECU 512 are directly communicatively connected.

The other interface 552 is connected to the bus 531. Accordingly, in the fourth embodiment, the connector device 511 and the bus 531 are directly communicatively connected.

The transfer and duplication device 553 is disposed between the two interfaces 551 and 552, and performs a process related to transfer and a process related to duplication between the ECU 512 and the bus 531.

Here, in the fourth embodiment, a device (the connector device 511) having a shape of a connector can be used as a device disposed between the ECU 512 and the bus 531, whereas as another configuration example, a device including a portion having a shape of a connector and a cable portion (also referred to as a "cable device with a connector" for convenience of description) may be used.

As the cable device with a connector, for example, a device including a portion having a shape of a connector for connection to the ECU 512 at one end of a cable portion, and a portion having a shape of a connector for connection to the bus 531 at the other end of the cable portion may be used.

Further, each of the two interfaces 551 and 552 included in the connector device 511 and the one interface 571 included in the ECU 512 may be configured by using a chip dedicated to the CAN.

The storage unit 554 temporarily stores the frame input to the connector device 511 from the ECU 512. The storage unit 554 serves as a buffer and has a function of a ring buffer in the fourth embodiment.

In the fourth embodiment, the frame input to the connector device 511 from the ECU 512 is copied by the transfer and duplication device 553, and the copied frame is input to and stored in the storage unit 554.

In the fourth embodiment, the storage unit 554 stores a predetermined number of frames with a new timing input to the connector device 511 from the ECU 512, and deletes the oldest frame and stores the new frame each time the new frame is input. For the predetermined number, three [pieces] are used in the fourth embodiment.

The control device 555 performs predetermined control on a transfer process that is performed by the transfer and duplication device 553.

In the fourth embodiment, a frame input from the bus 531 to the connector device 511 is copied by the transfer and duplication device 553, and the copied frame is input to and stored in the control device 555.

Here, the ECU 512 may include a power supply and may operate using power supplied from the power supply, as an example.

Further, the ECU 512 may operate using power supplied via the connector device 511, as another example.

In this case, the connector device 511 transmits the power supplied from the power supply and supplies the power to the ECU 512.

### «Configuration example of transfer and duplication device»

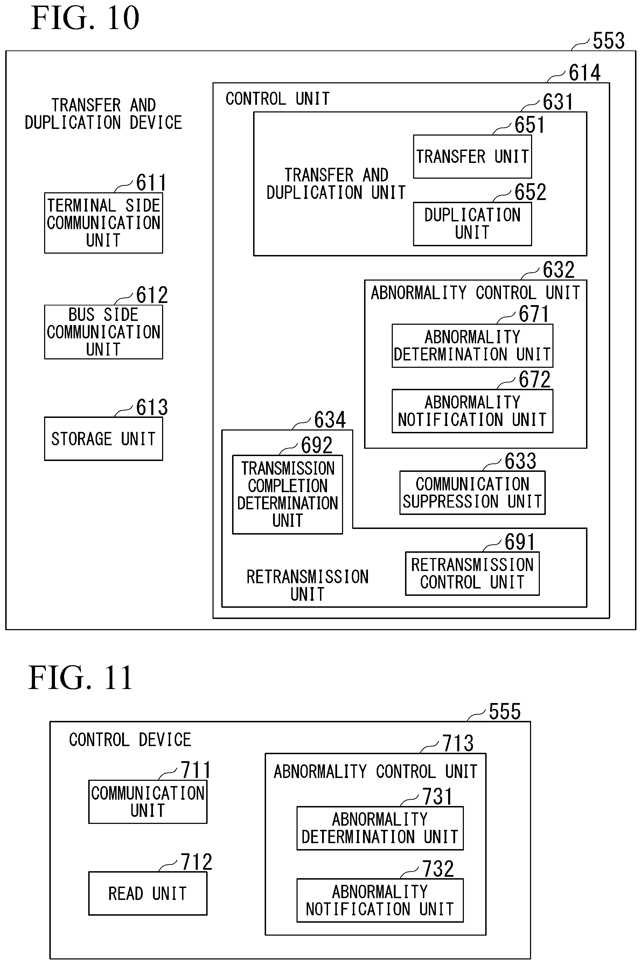

FIG. 10 is a diagram illustrating a schematic configuration example of the transfer and duplication device 553 according to an embodiment (the fourth embodiment) of the present invention. The transfer and duplication device 553 includes a terminal side communication unit 611, a bus side communication unit 612, a storage unit 613, and a control unit 614.

The terminal side communication unit 611 communicates with the ECU 512 via the terminal side interface 551. Specifically, the terminal side communication unit 611 outputs (transmits) a frame to the ECU 512 or inputs (receives) a frame from the ECU 512.

The bus side communication unit 612 communicates with the bus 531 via the interface 552 on the bus side. Specifically, the bus side communication unit 612 outputs (transmits) a frame to the bus 532, or inputs (receives) a frame from the bus 532.

The storage unit 613 stores information of a frame or the like. In the fourth embodiment, the storage unit 613 serves as a buffer that stores a frame that is a retransmission target, and has a function of a ring buffer in the fourth embodiment.

Here, as the storage unit 613, for example, a storage unit that stores a frame flowing from the ECU 512 to the bus 531 and a storage unit that stores a frame flowing from the bus 531 to the ECU 512 may be separately included. It should be noted that in the fourth embodiment, a configuration in which the storage unit 613 is included in the transfer and duplication device 553 has been adopted, whereas as another configuration example, the storage unit 554 outside the transfer and duplication device 553 may be used instead of the storage unit 613.

The control unit 614 performs various controls in the transfer and duplication device 553.

The control unit 614 includes a transfer and duplication unit 631, an abnormality control unit 632, a communication suppression unit 633, and a retransmission unit 634.

The transfer and duplication unit 631 includes a transfer unit 651 and a duplication unit 652.

The abnormality control unit 632 includes an abnormality determination unit 671 and an abnormality notification unit 672.

The retransmission unit 634 includes a retransmission control unit 691 and a transmission completion determination unit 692.

### «Transfer and duplication unit»

The transfer and duplication unit 631 will be described.

The transfer unit 651 outputs (transmits) the frame received from the ECU 512 by the terminal side communication unit 611, to the bus 531 using the bus side communication unit 612.

Further, the transfer unit 651 outputs (transmits) the frame received from the bus 531 by the bus side communication unit 612 to the ECU 512 using the terminal side communication unit 611.

In the fourth embodiment, the transfer unit 651 does not transfer the unauthorization notification frame transmitted from the IDS 513 and does not output the unauthorization notification frame to the ECU 512.

Here, the transfer unit 651 is controlled by the abnormality notification unit 672 of the abnormality control unit 632 included in the transfer and duplication device 553, or the control device 555. For example, when an instruction to stop transfer of frames is input from the abnormality notification unit 672 of the abnormality control unit 632 included in the transfer and duplication device 553, or the control device 555, the transfer unit 651 stops transfer of frames between the ECU 512 and the bus 531. As a preferable example, the transfer unit 651 stops all transfers immediately. For example, the transfer unit 651 interrupts transfer using software. It should be noted that the ECU 512 is not notified of the instruction.

Here, in order to prevent a frame transmitted from the abnormal ECU 512 from flowing to the bus 531, the transfer unit 651 may stop transfer of frames in a direction from the ECU 512 to the bus 531, but in the fourth embodiment, the transfer unit 651 may stop transfer of frames in a direction from the bus 531 to the ECU 512, thereby improving safety.

The duplication unit 652 copies a predetermined frame among frames input from the ECU 512, and outputs the copied frame to the storage unit 554. The predetermined frame may be all frames in the fourth embodiment.

The duplication unit 652 copies a predetermined frame among frames input from the bus 531 and outputs the copied frame to the control device 555. As the predetermined frame, for example, the unauthorization notification frame is included. The predetermined frame may be, for example, all frames.

### «Abnormality control unit»

The abnormality control unit 632 will be described.

The abnormality determination unit 671 determines a predetermined abnormality.

The abnormality notification unit 672 notifies of the predetermined abnormality. The abnormality notification unit 672, for example, may notify the transfer unit 651 of the abnormality or may notify the bus 531 of the abnormality.

As an example, when a frame input to the transfer and duplication device 553 from the ECU 512 matches a frame that can be transmitted by only the IDS 513, the abnormality determination unit 671 determines (detects) that there is an abnormality in the ECU 512. The frame may be defined (set) in advance or may be defined (set) at an arbitrary timing. An example of the frame that can be transmitted by only the IDS 513 may include a unauthorization notification frame.

In this case, the abnormality notification unit 672, for example, outputs (notifies), to the transfer unit 651, an instruction to stop the transfer of the frame. Further, the abnormality notification unit 672, for example, may output (transmit) a frame including information indicating that there is an abnormality in the ECU 512 (also referred to as a "terminal abnormality notification frame") to the bus 531 using the bus side communication unit 612. As this frame, for example, a broadcast frame may be used.

Here, the transfer and duplication device 553 stores information for determining whether or not a frame is a frame that can be transmitted by only the IDS 513 in the storage unit 613. The information may be identification information (ID) capable of specifying the frame.

As another example, when the frame input to the transfer and duplication device 553 from the ECU 512 matches a frame that can be transmitted by only the control device 555, the abnormality determination unit 671 determines (detects) that there is an abnormality in the ECU 512. The frame may be defined (set) in advance or may be defined (set) at an arbitrary timing.

In this case, the abnormality notification unit 672, for example, outputs (notifies), to the transfer unit 651, an instruction to stop the transfer of the frame. Further, the abnormality notification unit 672, for example, may output (transmit) a frame including information indicating that there is an abnormality in the ECU 512 (also referred to as a "terminal abnormality notification frame") to the bus 531 using the bus side communication unit 612. As this frame, for example, a broadcast frame may be used.

Here, the transfer and duplication device 553 stores information for determining whether or not a frame is a frame that can be transmitted by only the control device 555 in the storage unit 613. The information may be identification information (ID) capable of specifying the frame.

Here, the terminal abnormality notification frame may include, for example, information for identifying the ECU 512 in which the abnormality has occurred, or information for identifying the connector device 511 that has determined the abnormality. For example, ID information may be used as information for identifying each device.

The relay device 523, the management device 514, or the other terminal units 521 to 522 (for example, the connector device or the ECU) may receive the terminal abnormality notification frame via the bus 531, and store history information such as a reception date and time of the terminal abnormality notification frame in the storage unit (the storage unit 812 of the relay device 523, the storage unit 912 of the management device 514, or a storage unit (not illustrated) of the other terminal units 521 to 522).

### «Communication suppression unit»

The communication suppression unit 633 will be described.

The communication suppression unit 633 outputs (transmits) a frame for suppressing communication (also referred to as a "communication suppression frame") to the bus 531. The communication suppression frame is received by the relay device 523.

The communication suppression unit 633 may output the communication suppression frame in an arbitrary direction (in the example of FIG. 9, a direction of the ECU 512 or a direction of the bus 531) at an arbitrary timing. The communication suppression unit 633, for example, outputs the communication suppression frame in a predetermined aspect at the time of frame retransmission.

### «Retransmission unit»

The retransmission unit 634 will be described.

The retransmission control unit 691 controls retransmission of the frame.

In a case in which the retransmission control unit 691 has determined that the transmission of the frame has failed when the frame input to the connector device 511 from the ECU 512 is transmitted (transferred) to the bus 531, the retransmission control unit 691 performs the transmission of the frame again (that is, performs retransmission of the frame). The retransmission control unit 691 stores the information on the frame in the storage unit 613 until it is determined that the transmission of the frame has been successful or until the retransmission of the frame is abandoned and the retransmission is stopped. It should be noted that a condition for abandoning the retransmission of the frame may be arbitrary and, for example, a condition that the retransmission of the frame is not successful even when the retransmission of the frame is performed a predetermined number of times may be used.

Further, in a case in which the retransmission control unit 691 has determined that the transmission of the frame has failed when the frame input to the connector device 511 from the bus 531 is transmitted (transferred) to the ECU 512, the retransmission control unit 691 performs the transmission of the frame again (that is, performs retransmission of the frame). The retransmission control unit 691 stores the information on the frame in the storage unit 613 until it is determined that the transmission of the frame has been successful or until the retransmission of the frame is abandoned and the retransmission is stopped. It should be noted that a condition for abandoning the retransmission of the frame may be arbitrary and, for example, a condition that the retransmission of the frame is not successful even when the retransmission of the frame is performed a predetermined number of times may be used.

Here, in the fourth embodiment, when the ECU (the ECU 512 or another ECU) has normally received a frame addressed to the own device (the ECU), the ECU outputs (transmits) an ACK to the bus 531.

It should be noted that the transmission of a response frame (ACK) from the ECU 512 may be performed, for example, by the retransmission control unit 691 of the transfer and duplication device 553.

The transmission completion determination unit 692 determines the success of the transmission or the failure of the transmission as to the transmission of the frame.

When a frame is transmitted from the transfer and duplication device 553 and an ACK for the frame is received, the transmission completion determination unit 692 determines that the transmission of the frame has been successful.

On the other hand, when a frame is transmitted from the transfer and duplication device 553 and an ACK for the frame is not received or there is no response to the frame, the transmission completion determination unit 692 determines that the transmission of the frame has failed.

It should be noted that such a determination (the determination as to the success or the failure of the frame transmission) may also be performed by an ECU (the ECU 512 or another ECU).

### «Process of communication suppression unit at time of retransmission»

In the fourth embodiment, the retransmission control unit 691 of the retransmission unit 634 suppresses communication using the communication suppression unit 633.

It should be noted that although the communication suppression unit 633 and the retransmission unit 634 are separately shown in the fourth embodiment, a function of the communication suppression unit 633 may be included in the retransmission unit 634 as another configuration example. Further, as another configuration example, a function of suppressing communication at the time of retransmission (the function of the communication suppression unit 633 at the time of retransmission in the fourth embodiment) may be included in the retransmission unit 634, and the function of suppressing communication at the time other than the time of retransmission (the function of the communication suppression unit 633 at the time other than the time of retransmission in the fourth embodiment) may be included separately from the retransmission unit 634.

When the retransmission unit 634 retransmits, to the bus 531, the frame input from the ECU 512, the communication suppression unit 633 suppresses a frame that is input to the transfer and duplication device 553 from the ECU 512. In the fourth embodiment, the communication suppression unit 633 outputs a communication suppression frame to the ECU 512 to suppress a frame that is input to the transfer and duplication device 553 from the ECU 512.

Further, when the retransmission unit 634 retransmits, to the ECU 512, the frame input from the bus 531, the communication suppression unit 633 suppresses a frame that is input to the transfer and duplication device 553 from the bus 531. In the embodiment, the communication suppression unit 633 outputs a communication suppression frame to the bus 531 to suppress a frame that is input to the transfer and duplication device 553 from the bus 531.

### «Configuration example of control device»

FIG. 11 is a diagram illustrating a schematic configuration example of the control device 555 according to an embodiment (the fourth embodiment) of the present invention.

The control device 555 includes a communication unit 711, a readout unit 712, and an abnormality control unit 713.

The abnormality control unit 713 includes an abnormality determination unit 731 and an abnormality notification unit 732.

The communication unit 711 communicates with the transfer and duplication device 553. Specifically, the communication unit 711 inputs (receives) a frame from the transfer and duplication device 553 or outputs (transmits) the frame to the transfer and duplication device 553. Further, the communication unit 711 outputs (transmits) a predetermined instruction to the transfer and duplication device 553.

The readout unit 712 reads out the frame stored in the storage unit 554.

The abnormality control unit 713 performs predetermined control regarding an abnormality. The abnormality determination unit 731 monitors the frame input to the transfer and duplication device 553 from the bus 531 and copied by the duplication unit 652, and determines whether or not the frame is a unauthorization notification frame transmitted from the IDS 513. When the abnormality determination unit 731 determines (detects) that the frame is a unauthorization notification frame, the abnormality determination unit 731 determines whether or not the unauthorized frame notified by the unauthorization notification frame is stored in the storage unit 554. In this case, the frame referred to by the abnormality determination unit 731 may be, for example, all frames stored in the storage unit 554 or may be a predetermined number of frames from the latest frame.

In the fourth embodiment, the abnormality determination unit 731 determines whether or not the unauthorized frame notified by the unauthorization notification frame received from the transfer and duplication device 553 by the communication unit 711 matches the frame read out from the storage unit 554 by the readout unit 712. When the abnormality determination unit 731 determines that these frames match each other, the abnormality determination unit 731 may output, to the transfer unit 651, an instruction to stop the transfer of the frame in the transfer unit 651 of the transfer and duplication device 553.

Here, in the fourth embodiment, when there is a frame matching the unauthorized frame among the frames transmitted from the ECU 512, the control device 555 regards the abnormality as occurring in the ECU 512.

In this case, the control device 555 may output (transmit), for example, a frame including information indicating that there is the abnormality in the ECU 512 (a terminal abnormality notification frame) to the bus 531. As this frame, for example, a broadcast frame may be used.

It should be noted that in the fourth embodiment, the abnormality control unit 632 is included in the transfer and duplication device 553 separately from the abnormality control unit 713 of the control device 555. As another configuration example, some or all of functions of the abnormality control unit 632 may be included in the abnormality control unit 713 of the control device 555, and a frame to be referred to in the abnormality control unit 713 of the control device 555 is input to the control device 555 from the transfer and duplication device 553.

Further, in the fourth embodiment, one ECU 512 and one bus 531 are connected to one connector device 511. As another configuration example, three or more objects (devices or networks) may be connected to one connector device 511. In this case, the connector device 511 may include a routing function among these three or more devices.

In the routing function, for example, routing of the frame may be performed on the basis of the destination ID included in the frame.

### <Configuration example of relay device>

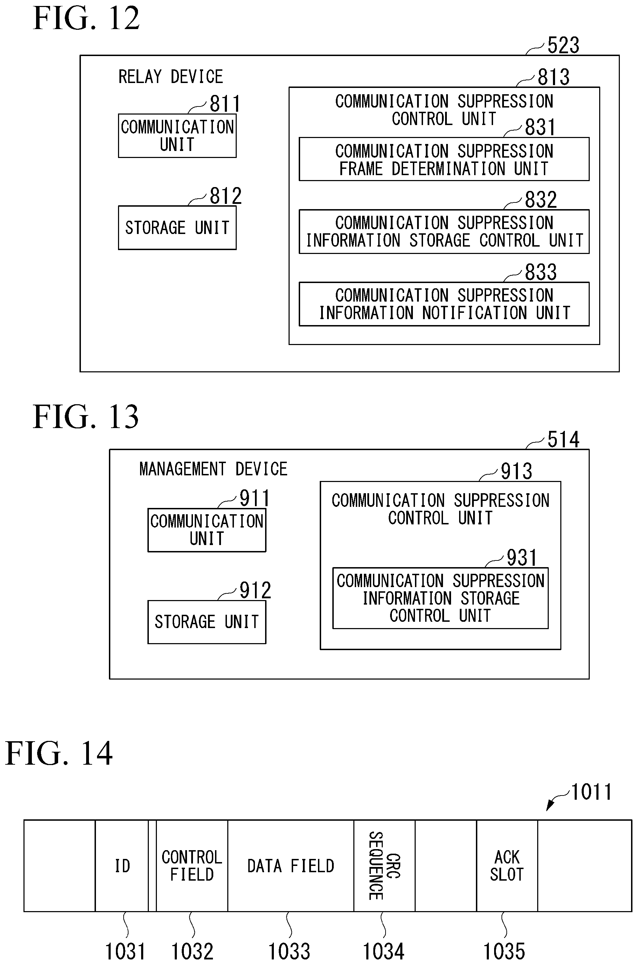

FIG. 12 is a diagram illustrating a schematic configuration example of the relay device 523 according to an embodiment (the fourth embodiment) of the present invention.

The relay device 523 includes a communication unit 811, a storage unit 812, and a communication suppression control unit 813.

The communication suppression control unit 813 includes a communication suppression frame determination unit 831, a communication suppression information storage control unit 832, and a communication suppression information notification unit 833.

The communication unit 811 communicates with the bus 531. Specifically, the communication unit 811 outputs (transmits) a frame to the bus 531 or inputs (receives) a frame from the bus 531.

The storage unit 812 stores various types of information.

The communication suppression control unit 813 has a function of outputting (transmitting) the communication suppression frame to the bus 531 using the communication unit 811. When the communication suppression control unit 813 outputs the communication suppression frame, the communication suppression information storage control unit 832 stores information on the communication suppression frame in the storage unit 812. The information includes information on a date and time at which the communication suppression frame is output (also referred to as "date and time information A1").

Further, the communication suppression frame determination unit 831 determines whether or not the frame received from the bus 531 by the communication unit 811 is the communication suppression frame. On the basis of a result of this determination, when the communication suppression frame (for example, the communication suppression frame transmitted from the connector device 511 or the like) is received, the communication suppression information storage control unit 832 stores the information on the communication suppression frame in the storage unit 812. The information includes information on a date and time when the communication suppression frame has been received (also referred to as "date and time information A2").

The communication suppression information notification unit 833 outputs (transmits), to the bus 531, a frame including the same information as the information stored in the storage unit 812 or information related to the information stored in the storage unit 812 (also referred to as a "communication suppression notification frame"), which is addressed to the management device 514, using the communication unit 811. The information included in the communication suppression notification frame includes the date and time information A1 or the date and time information A2.

### <Configuration example of management device>

FIG. 13 is a diagram illustrating a schematic configuration example of the management device 514 according to an embodiment (the fourth embodiment) of the present invention.

The management device 514 includes a communication unit 911, a storage unit 912, and a communication suppression control unit 913.

The communication suppression control unit 913 includes a communication suppression information storage control unit 931.

The communication unit 911 communicates with the bus 531. Specifically, the communication unit 911 outputs (transmits) a frame to the bus 531 or inputs (receives) a frame from the bus 531.

The storage unit 912 stores various types of information.

The communication suppression control unit 913 receives the communication suppression notification frame transmitted from the relay device 523, via the bus 531 using the communication unit 911. The communication suppression information storage control unit 931 stores the information included in the received communication suppression notification frame in the storage unit 912. The information includes information on the communication suppression frame output from the relay device 523 or information on the communication suppression frame received by the relay device 523, and includes the date and time information A1 or the date and time information A2.

### <Configuration example of frame of CAN>

FIG. 14 is a diagram illustrating a schematic configuration example of a frame 1011 (a data frame in the example of FIG. 14) of a CAN according to an embodiment (the fourth embodiment) of the present invention.

In the example of FIG. 14, some of components of the frame 1011 of the CAN are shown.

It should be noted that frames having various configurations may be used as the frame 1011 used in the embodiment.

The frame 1011 includes an ID representing a destination (also referred to as a "destination ID") 1031, a control field 1032, a data field 1033, a cyclic redundancy check (CRC) sequence 1034, and an acknowledgment (ACK) slot 1035. Each of these is constructed using dominant or recessive.

The ID 1031 is information indicating a destination, and represents a priority of communication arbitration in the CAN.

The control field 1032 includes information representing the amount (for example, number of bytes) of the data field 1033.

The data field 1033 includes data having a variable length, which is a transmission target. It should be noted that when the frame 1011 is used for purposes other than data transmission, the amount of the data field 1033 may be set to 0.

The CRC sequence 1034 includes information on cyclic redundancy check.

The ACK slot 1035 is a slot for performing ACK.

Here, in the CAN, a remote frame, an error frame, and an overload frame are used, in addition to the frame 1011 (data frame) illustrated in FIG. 14.

The data frame is used to transmit ordinary data.

The remote frame is used to make a request for transmission of a data frame to a destination of the data frame.

The error frame is used to notify of various errors. The transmission is interrupted on the reception side of the error frame.

The overload frame is used to notify that signal processing is not in time when the signal processing is not in time.

### <Assignment of ID of CAN>

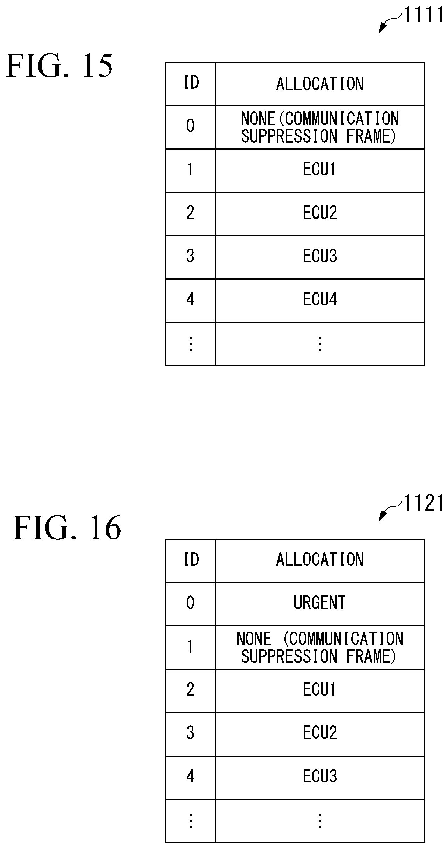

FIG. 15 is a diagram illustrating an example of the ID allocation information of the CAN (ID allocation information 1111) according to an embodiment (the fourth embodiment) of the present invention.

In the ID allocation information 1111 in the example of FIG. 15, an ID having a value of 0 is not assigned to a device such as the ECU 512 and is assigned to the communication suppression frame. Further, IDs having a value of 1 or more are assigned to different ECUs (the ECU 512 and the like) or other devices.

Thus, in the example of FIG. 15, the ID assigned to the communication suppression frame is dedicated for control and is not used for normal data communication.

FIG. 16 is a diagram illustrating another example of the ID allocation information of the CAN (ID allocation information 1121) according to an embodiment (the fourth embodiment) of the present invention.

In the ID allocation information 1121 in the example of FIG. 16, an ID having a value of 0 is not assigned to a device such as the ECU 512 and is assigned to an urgent frame. An ID having a value of 1 is not assigned to a device such as the ECU 512, and is assigned to the communication suppression frame. In addition, IDs having a value of 2 or more are assigned to different ECUs (the ECU 512 and the like) or other devices.

Thus, in the example of FIG. 16, IDs assigned to the urgent frame and the communication suppression frame are dedicated for control and are not used for normal data communication.

Here, for example, an ID with the highest priority may be used for a broadcast frame. As an example, in the example of FIG. 15 or the example of FIG. 16, an ID having a value of 0 may be included in a broadcast frame.

It should be noted that various allocation ways may be used in addition to the example of FIG. 15 or the example of FIG. 16, as a way of allocating the CAN ID.

### <Procedure for solving race state in CAN>

An example for a procedure of solving a race state (frame collision) in the CAN is shown.

The procedure for resolving a race state in the CAN differs depending on, for example, the presence or absence of a retransmission procedure.

First, an example of the procedure for resolving a race state in the CAN when a retransmission procedure is necessary is shown.

### «Example of means for solving race state according to 1-1»

A case in which a race state has occurred in communication between the bus 531 and the connector device 511 is shown.
(1-1-a) When a frame transmitted from the connector device 511 to the bus 531 is prioritized, nothing is executed.
(1-1-b) On the other hand, when a frame from the bus 531 to the connector device 511 is prioritized, the following process is executed. That is, the transfer and duplication device 553 outputs (transmits) the frame from the bus 531, to the control device 555 and the ECU 512. The transfer and duplication device 553 retransmits, to the bus 531, a frame received from the ECU 512 but being not able to be transmitted. The transfer and duplication device 553 restricts data communication between the ECU 512 and the own device (the transfer and duplication device 553) until the retransmission of the frame is successful or until the retransmission of the frame is abandoned (back pressure).

### «Example of means for solving race state according to 1-2»

A case in which a race state has occurred in communication between the ECU 512 and the connector device 511 is shown.
(1-2-a) When a frame transmitted from the connector device 511 to the ECU 512 is prioritized, nothing is executed.
(1-2-b) On the other hand, when a frame transmitted from the ECU 512 to the connector device 511 is prioritized, the following process is executed. That is, the transfer and duplication device 553 outputs (transmits) the frame from the ECU 512, to the storage unit 554 and the bus 531. The transfer and duplication device 553 retransmits, to the ECU 512, a frame received from the bus 531 but not being able to be transmitted. The transfer and duplication device 553 restricts data communication between the bus 531 and the own device (the transfer and duplication device 553) until the retransmission of the frame is successful or until the retransmission of the frame is abandoned (back pressure).

Next, an example of a procedure for resolving a race state in the CAN when the retransmission procedure is unnecessary is shown.

### «Example of means for solving race state according to 2-1»

A case in which a race state has occurred in communication between the bus 531 and the connector device 511 is shown.
(2-1-a) When a frame transmitted from the connector device 511 to the bus 531 is prioritized, nothing is executed.
(2-1-b) On the other hand, when a frame transmitted from the bus 531 to the connector device 511 is prioritized, the following process is executed. That is, the transfer and duplication device 553 outputs (transmits) the frame from the bus 531, to the control device 555 and the ECU 512. The transfer and duplication device 553 erases a frame received from the ECU 512 but being not able to be transmitted. It should be noted that back pressure processing is not performed.

### «Example of means for solving race state according to 2-2»

A case in which a race state has occurred in communication between the ECU 512 and the connector device 511 is shown.
(2-2-a) When a frame transmitted from the connector device 511 to the ECU 512 is prioritized, nothing is executed.
(2-2-b) On the other hand, when a frame transmitted from the ECU 512 to the connector device 511 is prioritized, the following process is executed. That is, the transfer and duplication device 553 outputs (transmits) the frame from the ECU 512, to the storage unit 554 and the bus 531. The transfer and duplication device 553 erases a frame received from the bus 531 but being not able to be transmitted. It should be noted that back pressure processing is not performed.

### <Hardware configuration of various devices>

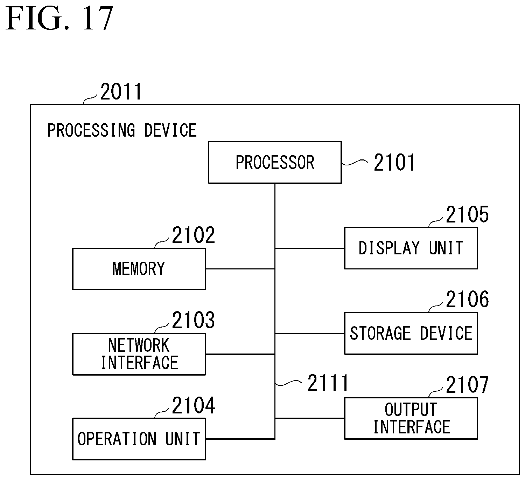

FIG. 17 is a diagram illustrating an example of a hardware configuration of various processing devices 2011 according to an embodiment of the present invention.

A configuration such as the processing device 2011 according to the example of FIG. 17 may be applied to various devices. For example, the configuration may be applied to the connector device 511, the transfer and duplication device 553, the control device 555, the terminal device (for example, the ECU 512), the relay device 523, the management device 514, or the like.

Further, the configuration of the processing device 2011 according to the example of FIG. 17, for example, may be partially changed and applied to various devices.

In the example of FIG. 17, the processing device 2011 includes a processor 2101, a memory 2102, a network interface 2103, an operation unit 2104, a display unit 2105, a storage device 2106, an input and output interface 2107, and a bus 2111 that connects these.

The processor 2101 is configured of a central processing unit (CPU) or the like, and executes a process defined in a program by executing the program.

The memory 2102 is a volatile storage unit. The memory 2102 includes a random access memory (RAM) or the like, and temporarily stores data. As the RAM, for example, a dynamic random access memory (DRAM) may be used.

The network interface 2103 is an interface connected to an external network.

The operation unit 2104 includes one or more input devices such as a keyboard and a mouse, and receives an operation that is performed by a person (user).

The display unit 2105 has a screen, and displays and outputs information on the screen.

The storage device 2106 is a nonvolatile storage unit. The storage device 2106 is configured of, for example, a hard disk or the like, and stores data. The storage device 2106 (or the memory 2102) may store, for example, a program to be executed by the processor 2101.

The input and output interface 2107 is an interface connected to an external recording medium or the like.

Here, the processing device 2011 may include one processor as the processor 2101 or may include two or more processors. As an example, the processing device 2011 may include a plurality of CPUs to execute respective processes using the respective CPUs and realize all processes using the plurality of CPUs in cooperation.

### [Conclusions for fourth embodiment]

As described above, in the CAN system 501 according to the embodiment, the same configuration as those in the first to third embodiments described above is applied, and the same effects as the first to third embodiments described above can be obtained.

It should be noted that, in the CAN system 501, it is possible to suppress communication of other frames by transmitting an error frame or an overload frame, but in this case, an abnormality is determined by the ECU 512. On the other hand, in the CAN system 501 according to the fourth embodiment, it is possible to suppress communication of other frames by transmitting the communication suppression frame, and in this case, no abnormality is determined in the ECU 512.

Here, in the fourth embodiment, the case in which the technology according to the fourth embodiment is applied to the communication system of the CAN has been shown, whereas as another configuration example, the technology according to the fourth embodiment is applied to any system other than the CAN.

In addition, in the fourth embodiment, the case in which the technologies according to the first to third embodiments are applied has been shown, whereas as another configuration example, some of the technologies in the first to third embodiments may be applied.

Further, for example, any technology in the first to third embodiments may be regarded as a characteristic technology, or any technology in the fourth embodiment may be regarded as a characteristic technology.

### <Configuration example>

As a configuration example, there is provided a transfer control device that is included in each terminal device between a network that communicates a frame free of any transmission source information and the terminal device, and controls transfer of the frame between the network and the terminal device, wherein a detection device having a function of detecting a frame having a specific property, and a function of transmitting first information on the frame having a specific property to the network when the detection device detects a frame having a specific property is connected to the network, the transfer control device includes a control unit that refers to a frame storage unit that stores a frame that is a transfer target output from the terminal device to the network when the control unit determines that the first information has been received from the detection device connected to the network on the basis of information for determining being the first information transmitted by the detection device, and performs a first determination to determine whether or not the frame having a specific property specified on the basis of the received first information is stored in the frame storage unit, and the first information includes information on content of the frame that is the transfer target output from the terminal device to the network as it is or digest information of the frame that is the transfer target.

As a configuration example, in the transfer control device, the digest information is information of a part of the frame that is a transfer target as it is or summary information of the content of the frame that is the transfer target.

As a configuration example, in the transfer control device, when the control unit determines that the frame having a specific property is stored in the frame storage unit in the first determination, the control unit stops a part or all of the transfer.

As a configuration example, in the transfer control device, when the control unit determines that the frame having a specific property is stored in the frame storage unit in the first determination, the control unit transmits information on a result of the determination to the network.

As a configuration example, in the transfer control device, the information on the determination result in the first determination is not transmitted to the terminal device.

As a configuration example, in the transfer control device, the first information on the frame having a specific property is not transmitted to the terminal device.

As a configuration example, in the transfer control device, the control unit performs a second determination to determine the abnormality in the terminal device when a frame matching a frame defined to be transmitted by the device that transmits the first information on the frame having a specific property is transmitted from the terminal device, as a determination separate from the first determination.

As a configuration example, in the transfer control device, the control unit performs a third determination to determine the abnormality in the terminal device when a frame matching a frame defined to be transmitted by the control unit is transmitted from the terminal device, as a determination separate from the first determination.

As a configuration example, the transfer control device includes the transfer unit that performs the transfer.

As a configuration example, the transfer control device includes the frame storage unit.

As a configuration example, in the transfer control device, the frame having a specific property is an unauthorized frame.

As a configuration example, in the transfer control device, a transfer control method that is executed by a control unit included in a transfer control device included for each terminal device between a network that communicates a frame free of any transmission source information and a terminal device, the transfer control device controlling transfer of a frame between the network and the terminal device, wherein a detection device having a function of detecting a frame having a specific property and a function of transmitting first information on the frame having a specific property to the network when the frame having a specific property has been detected is connected to the network, and the control unit refers to a frame storage unit that stores a frame that is a transfer target output from the terminal device to the network when the control unit determines that the first information has been received from the detection device connected to the network on the basis of information for determining being the first information transmitted by the detection device, and determines whether or not the frame having a specific property specified on the basis of the received first information is stored in the frame storage unit, and the first information includes information on content of the frame that is the transfer target output from the terminal device to the network as it is or digest information of the frame that is the transfer target.

As a configuration example, in the transfer control device, a program for causing a computer constituting a transfer control device included for each terminal device between a network that communicates a frame free of any transmission source information, a detection device having a function of detecting a frame having a specific property and a function of transmitting first information on the frame having a specific property to the network when the frame having a specific property has been detected being connected to the network, and the terminal device, the transfer control device controlling transfer of a frame between the network and the terminal device, to realize a function of referring to a frame storage unit that stores a frame that is a transfer target output from the terminal device to the network when it is determined that the first information has been received from the detection device connected to the network on the basis of information for determining being the first information transmitted by the detection device, and determining whether or not the frame having a specific property specified on the basis of the received first information is stored in the frame storage unit, wherein the first information includes information on content of the frame that is the transfer target output from the terminal device to the network as it is or digest information of the frame that is the transfer target.

As a configuration example, there is provided a transfer control device that controls transfer of a frame free of any transmission source information between a network that communicates the frame and a terminal device, wherein a detection device having a function of detecting a frame having a specific property, and a function of transmitting first information on the frame having a specific property to the network when the detection device detects a frame having a specific property is connected to the network, the transfer control device includes a control unit that refers to a frame storage unit that stores a frame after transfer output from the terminal device to the network via the transfer control device when the control unit determines that the first information has been received from the detection device connected to the network on the basis of information for determining being the first information transmitted by the detection device, and performs a first determination to determine whether or not the frame having a specific property specified on the basis of the received first information is stored in the frame storage unit, and the first information includes information on content of the frame after transfer output from the terminal device to the network or digest information of the frame after transfer.

As a configuration example, in the transfer control device, the digest information is information on content of a part of the frame after the transfer as it is, or summary information of the content of the frame after the transfer.

As a configuration example, in the transfer control device, when the control unit determines that the frame having a specific property is stored in the frame storage unit in the first determination, the control unit transmits a part or all of the transfer.

As a configuration example, in the transfer control device, when the control unit determines that the frame having a specific property is stored in the frame storage unit in the first determination, the control unit transmits information on a result of the determination to the network.

As a configuration example, in the transfer control device, the information on the determination result in the first determination is not transmitted to the terminal device.

As a configuration example, in the transfer control device, the first information on the frame having a specific property is not transmitted to the terminal device.

As a configuration example, the transfer control devices are included with the terminal devices on a one-to-one basis, and the control unit performs a second determination to determine an abnormality in the terminal device when a frame matching a frame defined to be transmitted by a device that transmits the first information on the frame having a specific property is transmitted from the terminal device, as a determination separate from the first determination.

As a configuration example, the transfer control devices are included with the terminal devices on a one-to-one basis, and the control unit performs a third determination to determine an abnormality in the terminal device when a frame matching a frame defined to be transmitted by the control unit is transmitted from the terminal device, as a determination separate from the first determination.

As a configuration example, the transfer control device includes a transfer unit that performs the transfer.

As a configuration example, the transfer control device includes the frame storage unit.

As a configuration example, in the transfer control device, the frame having a specific property is an unauthorized frame.

As a configuration example, in the transfer control device, a transfer control method that is executed by a control unit included in the transfer control device that controls transfer of a frame free of any transmission source information between a network that communicates the frame and a terminal device, wherein a detection device having a function of detecting a frame having a specific property, and a function of transmitting first information on the frame having a specific property to the network when the detection device detects a frame having a specific property is connected to the network, the control unit refers to a frame storage unit that stores a frame after transfer output from the terminal device to the network via the transfer control device when the control unit determines that the first information has been received from the detection device connected to the network on the basis of information for determining being the first information transmitted by the detection device, and determines whether or not the frame having a specific property specified on the basis of the received first information is stored in the frame storage unit, and the first information includes information on content of the frame after transfer output from the terminal device to the network or digest information of the frame after transfer.

As a configuration example, in the transfer control device, a program for causing a computer constituting a transfer control device that controls transfer of a frame free of any transmission source information between a network that communicates the frame, a detection device having a function of detecting a frame having a specific property and a function of transmitting first information on the frame having a specific property to the network when the frame having a specific property has been detected being connected to the network, and the terminal device, to realize a function of referring to a frame storage unit that stores a frame after transfer output from the terminal device to the network via the transfer control device when it is determined that the first information has been received from the detection device connected to the network on the basis of information for determining being the first information transmitted by the detection device, and determining whether or not the frame having a specific property specified on the basis of the received first information is stored in the frame storage unit, wherein the first information includes information on content of the frame after transfer output from the terminal device to the network or digest information of the frame after transfer.

### (Fifth embodiment)

### [Communication system]

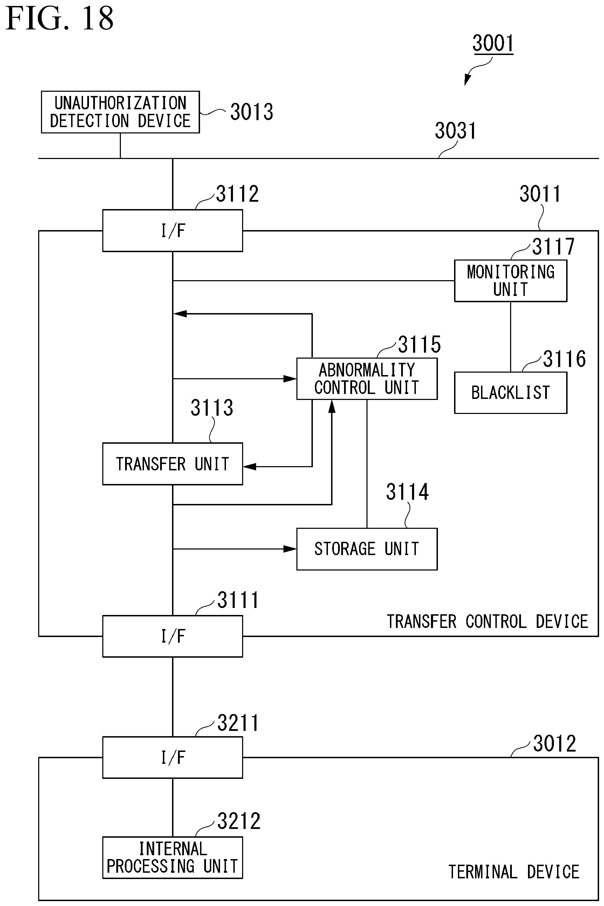

FIG. 18 is a diagram illustrating a schematic configuration example of a communication system 3001 according to an embodiment (a fifth embodiment) of the present invention.

The communication system 3001 according to the fifth embodiment schematically has a configuration in which a function regarding a blacklist is added in the same configuration as that of the communication system 1 illustrated in FIG. 1 according to the first embodiment.

Therefore, in the fifth embodiment, parts different from the communication system 1 illustrated in FIG. 1 according to the first embodiment will be described in detail, and description of the same parts will be omitted or simplified.

The communication system 3001 includes a transfer control device 3011, a terminal device 3012, an unauthorization detection device 3013, and a network 3031.

The transfer control device 3011 and the terminal device 3012 are communicatively connected, for example, directly.

Each of the transfer control device 3011 and the unauthorization detection device 3013 are connected to the network 3031.

It should be noted that as each communication, for example, wired communication may be performed or wireless communication may be performed.

The terminal device 3012 has the same function as that of the terminal device 12 illustrated in FIG. 1.

It should be noted that although not shown in the example of FIG. 1, an interface (I/F) 3211 and an internal processing unit 3212 are shown as processing units included in the terminal device 12 in the example of FIG. 18. The interface 3211 corresponds to a driver and performs conversion of a communication protocol. The internal processing unit 3212 can perform various controls and processes in the terminal device 12 and can communicate with the outside via the interface 3211.

The unauthorization detection device 3013 has the same function as the unauthorization detection device 13 illustrated in FIG. 1.

The network 3031 has the same function as the network 31 illustrated in FIG. 1.

Here, the communication system 3001 according to the fifth embodiment is, for example, a communication system of the CAN. In this case, the terminal device 3012 according to the embodiment is, for example, an ECU of the CAN. Further, the network 3031 according to the fifth embodiment is a CAN bus. Further, the unauthorization detection device 3013 according to the fifth embodiment is an IDS in the CAN.

### <Transfer control device>

The transfer control device 3011 includes an interface (I/F) 3111 on the terminal device 3012 side, an interface (I/F) 3112 on the network 3031 side, a transfer unit 3113, a storage unit 3114, an abnormality control unit 3115, a blacklist 3116, and a monitoring unit 3117.

Although not shown in the example of FIG. 1, the interfaces 3111 and 3112 are shown as processing units included in the transfer control device 3011 in the example of FIG. 18. The interface (I/F) 3111 on the terminal device 3012 side corresponds to a driver on the terminal device 3012 side and performs conversion of a communication protocol. The interface (I/F) 3112 on the network 3031 side corresponds to a driver on the network 3031 side and performs conversion of a communication protocol.

In the fifth embodiment, communication is performed between the interface 3211 of the terminal device 3012 and the interface 3111 of the transfer control device 3011, and communication is performed between the interface 3112 of the transfer control device 3011 and the network 3031.

A function of each of the transfer unit 3113, the storage unit 3114, and the abnormality control unit 3115 included in the transfer control device 3011 is the same as that of each of the transfer unit 51, the storage unit 52, and the abnormality control unit 53 included in the transfer control device 11 illustrated in FIG. 1.

A configuration and operation of the transfer control device 3011 according to the fifth embodiment are different from those of the transfer control device 11 illustrated in FIG. 1 in that the blacklist 3116 and the monitoring unit 3117 are provided.

Therefore, hereinafter, the blacklist 3116 and the monitoring unit 3117 will mainly be described in detail.

The blacklist 3116 is a storage unit that stores a predetermined blacklist. It should be noted that the storage unit may be shared with another storage unit (for example, the storage unit 52).

In the fifth embodiment, the blacklist is a list of identification information that is not included in a frame transmitted from a device other than the own device (the transfer control device 3011) (hereinafter also referred to as a "black ID"). The blacklist, for example, may hold one black ID or may hold two or more different black IDs. Further, for example, when there is no black ID, the blacklist may not hold a black ID.

Here, the black IDs held in the blacklist may be, for example, all the same as the identification information (ID) that may be included in the frame transmitted from the own device (the transfer control device 3011) or may be all different from the identification information, or only some of the black IDs may be the same as the identification information and the other of the black IDs may be different from the identification information.

As an example, all or some of the black ID held in the blacklist may be the same as the identification information (ID) that can be included only in the frame transmitted from the own device (the transfer control device 3011).

It should be noted that in the fifth embodiment, it is assumed that identification information (ID) that is not included in a frame transmitted from a device other than the own device (the transfer control device 3011) in the transfer control device 3011 matches identification information (ID) that is not included in a frame transmitted from a device other than the own device (the terminal device 3012) in the terminal device 3012 connected to the transfer control device 3011.

Similarly, in the fifth embodiment, it is assumed that identification information (ID) that can be included in a frame transmitted from the own device (the transfer control device 3011) in the transfer control device 3011 matches identification information (ID) that can be included in a frame transmitted from the own device (the terminal device 3012) in the terminal device 3012 connected to the transfer control device 3011.

A black ID, for example, is set and stored in the blacklist 3116 of the transfer control device 3011 by a user or the like in advance before the transfer control device 3011 is operated.

Further, the black ID held in the blacklist may be updated (rewritten) by a user or the like at an arbitrary timing.

It should be noted that, when the communication system 3001 is applied to the CAN, the ID of the CAN may be used as the identification information (ID) and the black ID.

The monitoring unit 3117 performs monitoring regarding the blacklist.

The monitoring unit 3117 acquires information on a frame input to the transfer control device 3011 from the network 3031 via the I/F 3112. In addition, the monitoring unit 3117 acquires information on the blacklist stored in the blacklist 3116. The monitoring unit 3117 determines whether or not a black ID is included in the frame on the basis of the acquired information on the frame and the acquired information on the blacklist.

When the monitoring unit 3117 determines that the black ID is included in the frame as a result of this determination, the monitoring unit 3117 determines that the frame is the unauthorized frame.

On the other hand, when the monitoring unit 3117 determines that the black ID is not included in the frame as a result of this determination, the monitoring unit 3117 determines that the frame is not an unauthorized frame (with respect to the black ID).

In the fifth embodiment, the monitoring unit 3117 further has a function of notifying the network 3031 that an unauthorized frame has been detected.

That is, when the monitoring unit 3117 determines that a frame is a frame including a black ID, the monitoring unit 3117 detects the frame as an unauthorized frame. The monitoring unit 3117 outputs (transmits) a frame including information on the frame (hereinafter also referred to as a "blacklist unauthorization notification frame") to the network 3031 via the interface 3112.

Here, in the fifth embodiment, a frame of the same format as the unauthorization notification frame transmitted by the unauthorization detection device 3013 is used as the blacklist unauthorization notification frame transmitted by the monitoring unit 3117. In this case, in the transfer control device 3011, the abnormality control unit 3115 can perform the same process as that in a case in which the unauthorization notification frame transmitted from the unauthorization detection device 3013 has been received, to thereby perform a process in a case in which the blacklist unauthorization notification frame transmitted from another device (the same function as that of the monitoring unit 3117 included in the other device) has been received. That is, when the blacklist unauthorization notification frame (a frame that cannot be distinguished from the unauthorization notification frame in the fifth embodiment) has been received from another device with respect to the frame transmitted from the own device (the transfer control device 3011), the abnormality control unit 3115 can stop a part or all of the transfer of the transfer unit 3113. In this case, for example, it can be presumed that there is unauthorization in the terminal device 3012 connected to the transfer control device 3011.

It should be noted that a frame of a different format from the unauthorization notification frame transmitted by the unauthorization detection device 3013 may be used as the blacklist unauthorization notification frame transmitted by the monitoring unit 3117. In this case, the abnormality control unit 3115 may have, for example, a function of identifying (specifying) the blacklist unauthorization notification frame.

As an example, the blacklist unauthorization notification frame may differ from the unauthorization notification frame only in that the blacklist unauthorization notification frame includes different identification information (ID). In this case, the abnormality control unit 3115 identifies (specifies) the blacklist unauthorization notification frame on the basis of the identification information (ID).

When the blacklist unauthorization notification frame is received from another device with respect to the frame transmitted from the own device (the transfer control device 3011), the abnormality control unit 3115 can stop a part or all of transfer of the transfer unit 3113.

In this case, for example, it can be presumed that there is unauthorization in the terminal device 3012 connected to the transfer control device 3011.

Further, in such a case, for example, in a process that is performed when the abnormality control unit 3115 has detected an unauthorized frame transmitted from the own device (the transfer control device 3011) using the blacklist unauthorization notification frame and a process that is performed when the abnormality control unit 3115 has detected an unauthorized frame transmitted from the own device (the transfer control device 3011) using the unauthorization notification frame, the same process may be performed or different processes may be performed.

### <Example of flow of process>

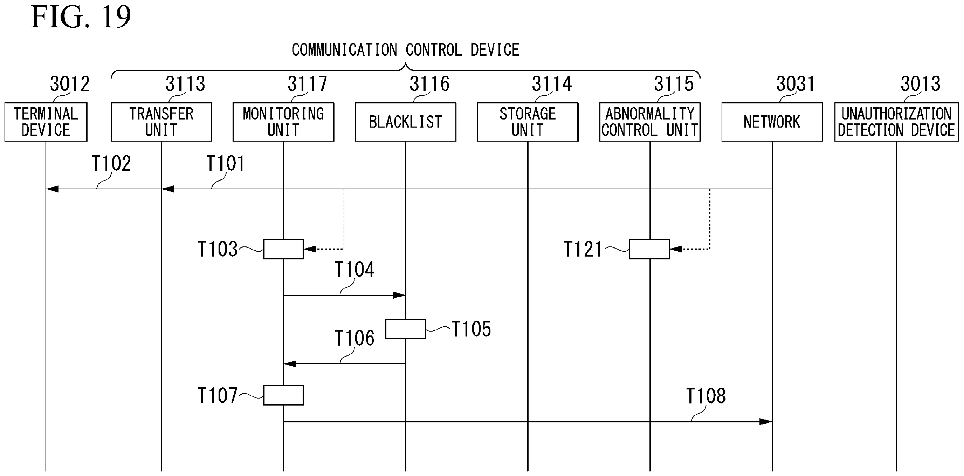

FIG. 19 is a diagram illustrating an example of a flow of a process that is performed in the communication system 3001 according to an embodiment (the fifth embodiment) of the present invention. Here, a process relating to the blacklist will be described.

FIG. 19 illustrates the transfer unit 3113, the storage unit 3114, the abnormality control unit 3115, the blacklist 3116, and the monitoring unit 3117 as processing units of the transfer control device 3011.

Further, a terminal device 3012, a network 3031, and a unauthorization detection device 3013 are illustrated in FIG. 19.

A case in which a frame transferred via the network 3031 is received by the transfer unit 3113 (process T101) and transferred to the terminal device 3012 is considered (process T102). It should be noted that the transfer unit 3113 may be configured not to transfer the blacklist unauthorization notification frame to the terminal device 3012.

The frame input to the transfer unit 3113 of the transfer control device 3011 from the network 3031 is also input to the monitoring unit 3117 (process T103).

The monitoring unit 3117 reads out the identification information (ID) included in the frame and transmits a signal for inquiring whether the identification information (ID) is held in the blacklist of the blacklist 3116 (hereinafter referred to as a "blacklist inquiry signal") to the blacklist 3116 (process T104).

The blacklist 3116 determines whether or not the identification information (ID) related to the inquiry is held in the blacklist in response to the blacklist inquiry signal received from the monitoring unit 3117 (process T105), and transmits a signal indicating a result of the determination to the monitoring unit 3117 (process T106).

The monitoring unit 3117 determines whether or not the identification information (ID) related to the inquiry is held in the blacklist according to the signal received from the blacklist 3116 (process T107).

Here, in the example of FIG. 19, a case in which the identification information (ID) related to the inquiry is held in the blacklist is shown for convenience of description. In this case, the monitoring unit 3117 transmits a blacklist unauthorization notification frame including information indicating a result of the determination to the network 3031 (process T108).

It should be noted that, when the identification information (ID) related to the inquiry is not held in the blacklist, the monitoring unit 3117 does not transmit the blacklist unauthorization notification frame.

Further, in the example of FIG. 19, the process (process T121) in which the abnormality control unit 3115 acquires a frame from the network 3031 is also shown. However, subsequent processes will be omitted because the subsequent processes are the same as those in the case of the example of FIG. 1 according to the first embodiment.

Here, in the example of FIG. 19, a configuration in which the monitoring unit 3117 transmits the identification information (ID) related to the inquiry to the blacklist 3116, and the blacklist 3116 determines whether or not the identification information (ID) is held in the blacklist has been shown, whereas as another configuration example, a configuration in which the monitoring unit 3117 acquires information on the blacklist from the blacklist 3116, and the monitoring unit 3117 determines whether or not the identification information (ID) is held in the list on the basis of the information may be used.

### [Communication system according to modification example]

As a modification example, in the transfer control device 3011, a transfer and duplication unit having the same function as the transfer and duplication unit 91 in the transfer control device 71 illustrated in FIG. 3 may be included instead of the transfer unit 3113. In this case, the transfer and duplication unit, for example, may duplication the information on the frame received from the network 3031 and transmit the copied information of the frame to the monitoring unit 3117. In this case, the monitoring unit 3117 acquires the information on the frame transmitted from the transfer and duplication unit, and performs a process related to the blacklist.

### [Conclusions for fifth embodiment]

As described above, in the communication system 3001 according to the fifth embodiment, when a frame corresponding to the information held in the blacklist is received, the transfer control device 3011 can notify the network 3031 side of a signal indicating the fact (a blacklist unauthorization notification frame).

Further, in the communication system 3001 according to the fifth embodiment, when the transfer control device 3011 receives the blacklist unauthorization notification frame received from another device, the transfer control device 3011 can determine whether or not the frame transmitted from the terminal device 3012 connected to the own device (the transfer control device 3011) is an unauthorized frame. Accordingly, in the communication system 5001 according to the fifth embodiment, it is possible to specify the device that has transmitted the unauthorized frame related to the blacklist unauthorization notification frame.

Further, in the fifth embodiment, since the blacklist information is stored by the transfer control device 3011, it is possible to manage the blacklist information by changing (rewriting) storage content of the transfer control device 3011. Further, in the fifth embodiment, it is not necessary to add a configuration regarding the blacklist to the terminal device 3012.

It should be noted that a configuration in which one terminal device 3012 is connected to one transfer control device 3011 is shown in the fifth embodiment, a configuration in which a plurality of terminal devices 3012 are connected to one transfer control device 3011 may be used as another configuration example. In this configuration, the transfer control device 3011 has, for example, a function of performing the same process as that of the fifth embodiment on each of the plurality of terminal devices 3012 connected to the transfer control device 3011.

### <Configuration example>

For example, it is possible to implement a communication control device (a transfer control device).

As a configuration example, the communication control device is a transfer control device (the transfer control device 3011 in the fifth embodiment) that is included for each terminal device between a network (the network 3031 in the fifth embodiment) and a terminal device (the terminal device 3012 in the fifth embodiment), and controls transfer of frames between the network and the terminal device, wherein a frame that is a transmission target (after transmission) is a frame that is a transfer target (after transfer) of a communication control unit, and a control unit (the communication control unit 4112 and, more specifically, the monitoring unit 3117 in the fifth embodiment) determines whether or not identification information held in a blacklist of a blacklist (the blacklist of the blacklist 3116 in the fifth embodiment) that holds identification information that is not transmitted by a device other than the terminal device is included in a frame transferred from the network to the terminal device.

As a configuration example, in the communication control device, when the control unit determines that the identification information held in the blacklist is included in the frame transferred from the network to the terminal device, the control unit transmits information on a result of the determination (for example, the blacklist unauthorization notification frame in the fifth embodiment) to the network.

It should be noted that similarly, it is also possible to implement a communication control method (a transfer control method), a program, or the like.

### (Sixth embodiment)

### [Communication system]

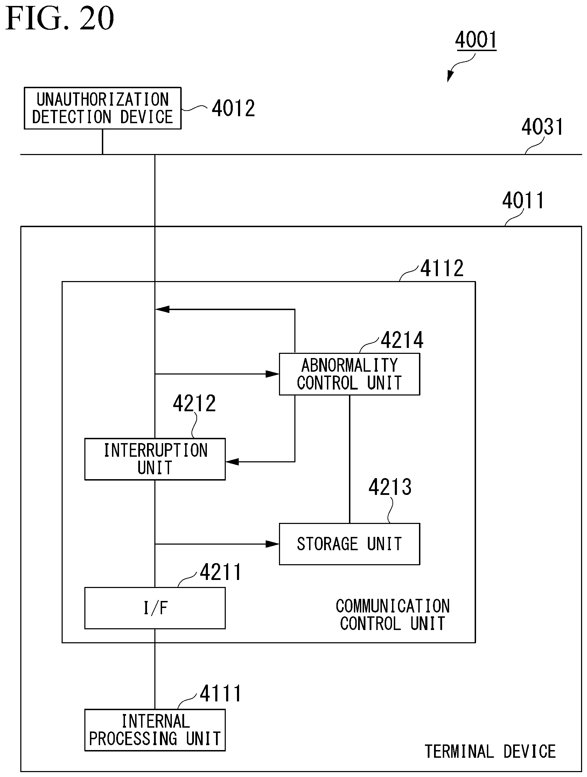

FIG. 20 is a diagram illustrating a schematic configuration example of a communication system 4001 according to an embodiment (a sixth embodiment) of the present invention.

The communication system 4001 according to the sixth embodiment communicates a frame of a predetermined format.

The communication system 4001 includes a terminal device 4011, a unauthorization detection device 4012, and a network 4031.

Each of the terminal device 4011 and the unauthorization detection device 4012 are connected to the network 4031.

It should be noted that as each communication, for example, wired communication may be performed or wireless communication may be performed.

The terminal device 4011 outputs (transmits) a frame addressed to another device (not illustrated) connected to the network 4031 to the network 4031.

The terminal device 4011 inputs (receives) the frame from the network 4031. The terminal device 4011 determines whether or not the frame input (received) from the network 4031 is a frame addressed to the own device (the terminal device 4011), and performs a process on the frame addressed to the own device. It should be noted that the terminal device 4011 also determines that the broadcast frame is a frame addressed to the own device.

The unauthorization detection device 4012 has the same function as the unauthorization detection device 13 illustrated in FIG. 1.

The network 4031 has the same function as the network 31 illustrated in FIG. 1.

Here, the communication system 4001 according to the sixth embodiment is, for example, a communication system of the CAN. In this case, the terminal device 4011 according to the sixth embodiment is, for example, an ECU of the CAN.

Further, the network 4031 according to the sixth embodiment is a bus of the CAN. Further, the unauthorization detection device 4012 according to the sixth embodiment is an IDS in the CAN.

### <Terminal device>

The terminal device 4011 includes an internal processing unit 4111 and a communication control unit 4112.

The communication control unit 4112 includes an interface (I/F) 4211, an interruption unit 4212, a storage unit 4213, and an abnormality control unit 4214.

The interface 4211 corresponds to a driver and performs conversion of a communication protocol. In the sixth embodiment, the interface 4211 performs conversion of a communication protocol adapted for communication with the network 4031.

The internal processing unit 4111 can perform various controls and processes in the terminal device 4011 and communicate with the outside via the interface 4211.

Here, the communication control unit 4112 may be regarded as, for example, a processing unit such as an extended driver in which functions of the other processing units (the interruption unit 4212, the storage unit 4213, and the abnormality control unit 4214) have been added to a function of the interface 4211.

The interruption unit 4212 has a function of blocking communication between the interface 4211 and the network 4031.

In the sixth embodiment, the interruption unit 4212 can switch between a state in which communication between the interface 4211 and the network 4031 is performed (instead of being interrupted) and a state in which the communication is interrupted and not performed. In this case, the interruption unit 4212 may be, for example, an opening and closing switch. When the interruption unit 4212 is in an open state (a non-conducting state), the interruption unit 4212 interrupts the communication between the interface 4211 and the network 4031, and when the interruption unit 4212 is in a closed state (a conducting state), the interruption unit 4212 enables communication between the interface 4211 and the network 4031.

In the sixth embodiment, the interruption unit 4212 is controlled by the abnormality control unit 4214.

The storage unit 4213 temporarily stores a frame to be output (transmitted) from the internal processing unit 4111 via the interface 4211. In the sixth embodiment, the storage unit 4213 stores a predetermined number of frames of which timings at which the frames are output (transmitted) from the internal processing unit 4111 via the interface 4211 are new, and deletes the oldest frames and stores the new frame each time the new frame is input.

Here, as an example, when a frame is input from the internal processing unit 4111 to the network 4031, the communication control unit 4112 (for example, the interface 4211) simultaneously performs storing the information in the storage unit 4213 (for example, a ring buffer) bit by bit while receiving the information on the frame bit by bit and outputting the information to the network 4031 bit by bit. When the frame cannot be transmitted due to a busy state of the network 4031, the communication control unit 4112 (for example, the interface 4211) erases the information on the frame stored in the storage unit 4213.

Further, as an example, the communication control unit 4112 (for example, the interface 4211) outputs the information on the frame input from the network 4031 to the internal processing unit 4111 while confirming the information on each frame bit by bit.

It should be noted that as another configuration example, the communication control unit 4112 (for example, the interface 4211) may collect the entire information on the frame to be stored in the storage unit 4213 and then store the information in the storage unit 4213. Further, the communication control unit 4112 (for example, the interface 4211) may collect the entire information on the frame to be output to the internal processing unit 4111 (the frame from the network 4031) and then output the information to the internal processing unit 4111.

The abnormality control unit 4214 monitors a frame input to the terminal device 4011 (the communication control unit 4112 from the network 4031 in the sixth embodiment), and determines whether or not the frame is a unauthorization notification frame transmitted from the unauthorization detection device 4012. When the abnormality control unit 4214 determines (detects) that the frame is a unauthorization notification frame, the abnormality control unit 4214 determines whether or not an unauthorized frame notified by the unauthorization notification frame is stored in the storage unit 4213. In this case, the frame referred to by the abnormality control unit 4214 may be, for example, all frames stored in the storage unit 4213 or may be a predetermined number of frames from the latest frame.

When the abnormality control unit 4214 determines (detects) that the unauthorized frame notified by the unauthorization notification frame is stored in the storage unit 4213, the abnormality control unit 4214 outputs an instruction, to the interruption unit 4212, to instruct the interruption unit 4212 to block the communication between the interface 4211 and the network 4031. When the instruction is input from the abnormality control unit 4214, the interruption unit 4212 interrupts frame communication between the terminal device 4011 and the network 4031.

It should be noted that, in the sixth embodiment, when there is a frame matching an unauthorized frame among the frames output (transmitted) from the terminal device 4011, the communication control unit 4112 regards an abnormality as occurring in the terminal device 4011.

In this case, for example, the abnormality control unit 4214, for example, outputs (transmits) a frame including information indicating that there is an abnormality in the terminal device 4011 (hereinafter also referred to as a "terminal abnormality notification frame") to the network 4031. As this frame, for example, a broadcast frame may be used. In the terminal abnormality notification frame, for example, information for identifying the terminal device 4011 in which the abnormality has occurred may be included.

The unauthorization detection device 4012, another terminal device (not illustrated), or another device (not illustrated) may receive the terminal abnormality notification frame via the network 4031 and store history information such as a reception date and time of the terminal abnormality notification frame in a storage unit (not illustrated).

Further, the abnormality control unit 4214 may determine that there is an abnormality in the terminal device 4011 using another scheme.

As an example, when a frame transmitted from the terminal device 4011 to the network 4031 is input and the input frame matches a frame that can be transmitted by only the unauthorization detection device 4012, the abnormality control unit 4214 determines (detects) that there is an abnormality in the terminal device 4011. A unauthorization notification frame, for example, may be included as the frame that can be transmitted by only the unauthorization detection device 4012.

Here, the abnormality control unit 4214 stores information for determining whether or not a frame is a frame that can be transmitted by only the unauthorization detection device 4012. The frame may be defined (set) in advance or may be defined (set) at an arbitrary timing. The information may be identification information (ID) capable of specifying the frame.

As another example, when a frame transmitted from the terminal device 4011 to the network 4031 is input and the input frame matches a frame that can be transmitted by only the abnormality control unit 4214, the abnormality control unit 4214 determines (detects) that there is an abnormality in the terminal device 4011.

Here, the abnormality control unit 4214 stores information for determining whether or not a frame is a frame that can be transmitted by only the abnormality control unit 4214. The frame may be defined (set) in advance or may be defined (set) at an arbitrary timing. The information may be identification information (ID) capable of specifying the frame.

### <Example of flow of process>

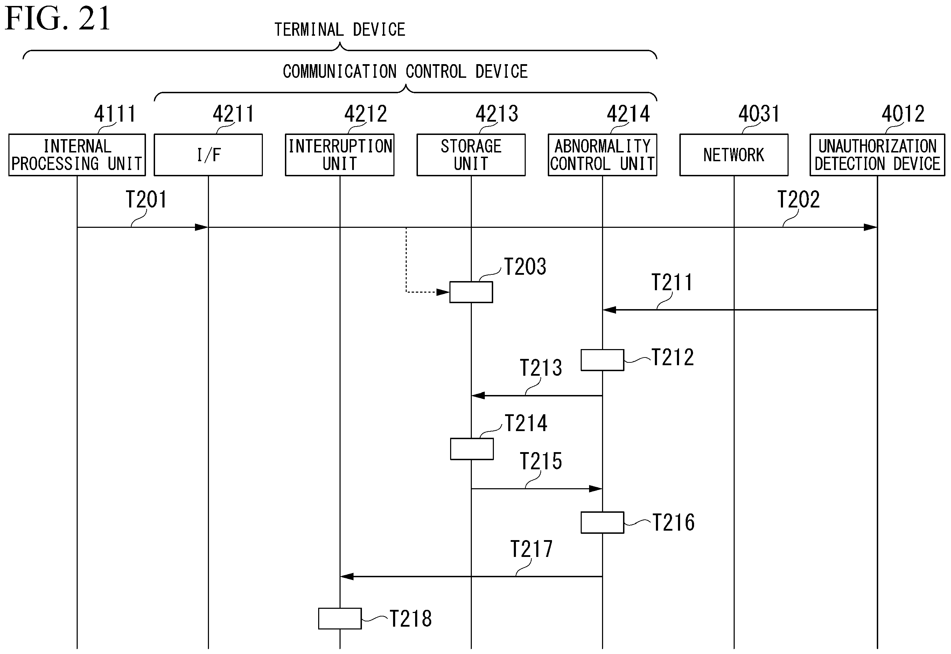

FIG. 21 is a diagram illustrating an example of a flow of a process that is performed in the communication system 4001 according to an embodiment (the sixth embodiment) of the present invention.

In FIG. 21, an internal processing unit 4111, an interface 4211 that is a processing unit of the communication control unit 4112, an interruption unit 4212, a storage unit 4213, and an abnormality control unit 4214 are illustrated as processing unites of the terminal device 4011.

In addition, in FIG. 21, a network 4031 and a unauthorization detection device 4012 are illustrated.

In the terminal device 4011, the internal processing unit 4111 outputs (transmits) a frame addressed to another device (not illustrated) connected to the network 4031 to the interface 4211 (process T201).

The interface 4211 transmits the frame to the network 4031 (process T202). The frame is received by the unauthorization detection device 4012.

In the terminal device 4011, the storage unit 4213 stores the frame (process T203).

When the unauthorization detection device 4012 determines that the received frame is an unauthorized frame, the unauthorization detection device 4012 transmits a unauthorization notification frame including information on the unauthorized frame to the network 4031 (process T211). The unauthorization notification frame is acquired by the abnormality control unit 4214 (process T212).

The abnormality control unit 4214 determines whether or not the unauthorized frame notified by the received unauthorization notification frame matches the frame stored in the own device (the storage unit 4213 of the terminal device 4011) (processes T213 to T215).

Specifically, the abnormality control unit 4214 transmits a signal for inquiring whether or not a frame matching the unauthorized frame notified by the received unauthorization notification frame is stored in the storage unit 4213 (hereinafter referred to as a "unauthorized frame inquiry signal) to the storage unit 4213 (process T213).

In response to the unauthorized frame inquiry signal received from the abnormality control unit 4214, the storage unit 4213 determines whether or not the frame related to the inquiry is stored in the storage unit 4213 (process T214), and transmits a signal indicating a result of the determination to the abnormality control unit 4214 (process T215).

In response to the signal received from the storage unit 4213, the abnormality control unit 4214 determines whether or not the frame related to the inquiry is stored in the storage unit 4213 (process T216).

Here, in the example of FIG. 21, a case in which the frame related to the inquiry is stored in the storage unit 4213 is shown for convenience of the description. In this case, the abnormality control unit 4214 transmits a signal for instructing the interruption unit 4212 to interrupt the communication (process T217). In response thereto, the interruption unit 4212 interrupts a path between the interface 4211 and the network 4031 to interrupt the communication between the terminal device 4011 and the network 4031 (process T218).

It should be noted that, when the frame related to the inquiry is not stored in the storage unit 4213, the abnormality control unit 4214 does not perform control of interrupting the communication using the interruption unit 4212.

Here, in the example of FIG. 21, a configuration in which the abnormality control unit 4214 transmits the information on the frame related to the inquiry to the storage unit 4213, and the storage unit 4213 determines whether or not the frame is stored in the storage unit 4213 has been shown, whereas as another configuration example, the abnormality control unit 4214 acquires the information on the frame stored in the storage unit 4213 from the storage unit 4213, and determines whether or not the frame is stored in the storage unit 4213 on the basis of the information may be used.

### [Conclusions for sixth embodiment]

As described above, in the communication system 4001 according to the sixth embodiment, the terminal device 4011 can determine a state of communication between the terminal device 4011 and the network 4031 on the basis of an instruction (a unauthorization notification frame in the sixth embodiment) from an external device (the unauthorization detection device 4012 in the sixth embodiment), and can control whether or not the communication is possible. For example, when the terminal device 4011 determines that there is an abnormality in the terminal device 4011, the terminal device 4011 can interrupt the communication. Accordingly, for example, even when an abnormality has occurred in the terminal device 4011, the terminal device 4011 can interrupt abnormal communication or unauthorized communication. By interrupting the abnormal communication or the unauthorized communication as described above, it is possible to prevent a trouble from spreading to the entire communication system 4001.

Further, in the communication system 4001 according to the sixth embodiment, it is possible to store and manage, for example, information for identifying the terminal device 4011 in which the abnormality has occurred. Accordingly, in the communication system 4001 according to the sixth embodiment, it is possible to specify the terminal device 4011 in which the abnormality has occurred.

Here, for example, when the communication system 4001 is applied to the network 4031 of the CAN, the terminal device 4011 has a retransmission control function, a communication arbitration function, and a busy determination function using the internal processing unit 4111 and the interface 4211.

It should be noted that an arbitrary communication scheme may be used in the network inside the terminal device 4011. For example, any one of SPI, I2C, and the CAN may be used.

As an example, when the communication system 4001 is applied to the network 4031 of the CAN, a device obtained by adding functions of the interruption unit 4212, the storage unit 4213, and the abnormality control unit 4214 to a terminal device (for example, an ECU) that is the same as the CAN of the related art can be used as the terminal device 4011. In this case, it is possible to use the functions of the same terminal device (for example, an ECU) as the CAN of the related art with respect to a communication arbitration function, a busy determination function, and the like.

In the sixth embodiment, for example, in the terminal device 4011, the frame output from the terminal device 4011 to the network 4031 and the frame input to the terminal device 4011 from the network 4031 may not be separated.

Further, in a case in which the functions of the interruption unit 4212, the storage unit 4213, and the abnormality control unit 4214 are included integrally with the terminal device 4011 as in the sixth embodiment, a simple configuration can be adopted and an influence of the separate device (for example, an influence of noise) may not be considered, for example, as compared with a case in which these functions are included in a device separate from the terminal device 4011.

### <Configuration example>

For example, it is possible to implement a communication control device (a device integrated with a terminal device).

As a configuration example, the communication control device (the communication control unit 4112 of the terminal device 4011 in the sixth embodiment) is integrated with the terminal device (the terminal device 4011 in the sixth embodiment).

As a configuration example, in the communication control device, when the control unit (the communication control unit 4112, more specifically, the abnormality control unit 4214 in the sixth embodiment) determines that a frame having a specific property is stored in the frame storage unit (the storage unit 4213 in the sixth embodiment) in the first determination, the control unit interrupts communication between the terminal device and the network (the network 4031 in the sixth embodiment) (the interruption unit 4212 in the sixth embodiment).

It should be noted that similarly, it is also possible to implement a communication control method or a program.

### (Seventh embodiment)

### [Communication system]

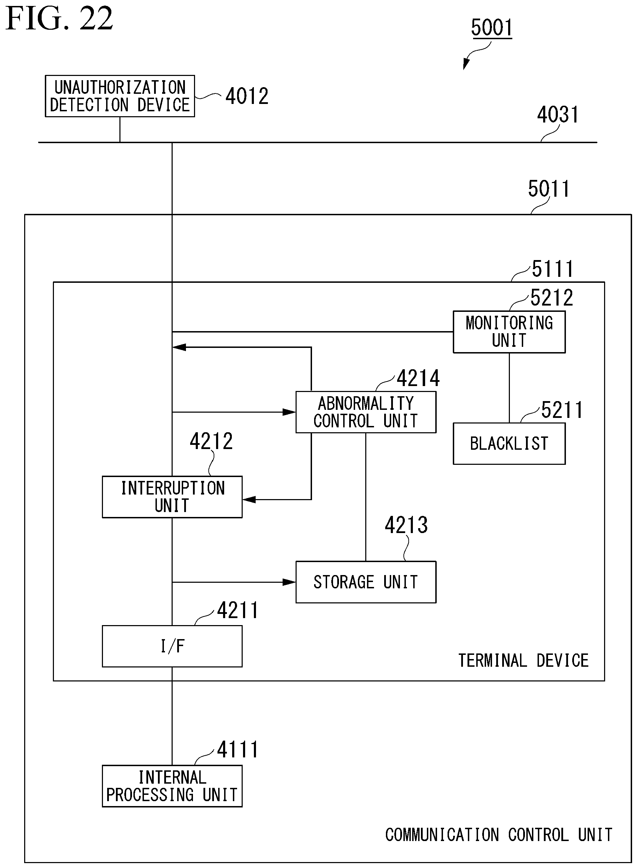

FIG. 22 is a diagram illustrating a schematic configuration example of a communication system 5001 according to an embodiment (a seventh embodiment) of the present invention.

The communication system 5001 according to the seventh embodiment roughly has a configuration in which a function regarding a blacklist is added in the same configuration as that of the communication system 4001 illustrated in FIG. 20 according to the sixth embodiment.

Therefore, in the seventh embodiment, parts different from the communication system 4001 of the sixth embodiment illustrated in FIG. 20 will be described in detail, and description of the same parts will be omitted or simplified.

Further, in the seventh embodiment, the same processing units as the processing units illustrated in FIG. 20 according to the sixth embodiment are denoted by the same reference numerals.

The communication system 5001 includes a terminal device 5011, a unauthorization detection device 4012, and a network 4031.

Here, the unauthorization detection device 4012 and the network 4031 are respectively the same as those illustrated in FIG. 20 according to the sixth embodiment.

### <Terminal device>

The terminal device 5011 includes an internal processing unit 4111 and a communication control unit 5111.

The communication control unit 5111 includes an interface (I/F) 4211, an interruption unit 4212, a storage unit 4213, an abnormality control unit 4214, a blacklist 5211, and a monitoring unit 5212.

Here, the internal processing unit 4111, the interface (I/F) 4211, the interruption unit 4212, the storage unit 4213, and the abnormality control unit 4214 are the same as those illustrated in FIG. 20 according to the sixth embodiment.

A configuration and operation of the terminal device 5011 according to the seventh embodiment are different from those of the terminal device 4011 illustrated in FIG. 20 in that the blacklist 5211 and the monitoring unit 5212 are included.

Therefore, hereinafter, the blacklist 5211 and the monitoring unit 5212 will mainly be described in detail.

The blacklist 5211 is a storage unit that stores a predetermined blacklist. It should be noted that the storage unit may be shared with another storage unit (for example, the storage unit 4213).

In the seventh embodiment, the blacklist is a list of identification information that is not included in a frame transmitted from a device other than the own device (the transfer control device 5011) (hereinafter also referred to as a "black ID"). The blacklist, for example, may hold one black ID or may hold two or more different black IDs. Further, for example, when there is no black ID, the blacklist may not hold a black ID.

Here, the black IDs held in the blacklist may be all the same as, for example, the identification information (ID) that may be included in the frame transmitted from the own device (the terminal device 5011) or all different from the identification information (ID), or only some of the black IDs may be the same as the identification information (ID) and the other of the black IDs may be different from the identification information (ID).

As an example, all or some of the black IDs held in the blacklist may be the same as the identification information (ID) that can be included only in the frame transmitted from the own device (the terminal device 5011).

A black ID, for example, is set and stored in the blacklist 5211 of the terminal device 5011 by a user or the like in advance before the terminal device 5011 is operated.

Further, the black ID held in the blacklist may be updated (rewritten) by the user or the like at an arbitrary timing.

It should be noted that when the communication system 5001 is applied to the CAN, an ID of the CAN may be used as the identification information (ID) and the black ID.

The monitoring unit 5212 performs monitoring regarding the blacklist.

The monitoring unit 5212 acquires the information on the frame input to the communication control unit 5111 of the terminal device 5011 from the network 4031. In addition, the monitoring unit 5212 acquires the information on the blacklist stored in the blacklist 5211. The monitoring unit 5212 determines whether or not a black ID is included in the frame, on the basis of the acquired information on the frame and the acquired information on the blacklist.

As a result of this determination, when the monitoring unit 5212 determines that the black ID is included in the frame, the monitoring unit 5212 determines that the frame is an unauthorized frame.

On the other hand, as a result of this determination, when the monitoring unit 5212 determines that the black ID is not included in the frame, the monitoring unit 5212 determines that the frame is not the unauthorized frame (with respect to the black ID).

In the seventh embodiment, the monitoring unit 5212 further has a function of notifying the network 4031 that an unauthorized frame has been detected.

That is, when the monitoring unit 5212 determines that a frame is a frame including a black ID, the monitoring unit 5212 detects the frame as an unauthorized frame. The monitoring unit 5212 outputs (transmits) a frame including information on such a frame (also referred to as a "blacklist unauthorization notification frame") to the network 4031.

Here, in the seventh embodiment, a frame of the same format as the unauthorization notification frame transmitted by the unauthorization detection device 4012 is used as the blacklist unauthorization notification frame transmitted by the monitoring unit 5212. In this case, in the communication control unit 5111 of the terminal device 5011, the abnormality control unit 4214 can perform the same process as a case in which the unauthorization notification frame transmitted from the unauthorization detection device 4012 has been received, to perform a process in a case in which the blacklist unauthorization notification frame transmitted from another devices (the same function as that of the monitoring unit 5212 included in the other device) has been received. That is, the abnormality control unit 4214 can interrupt communication using the interruption unit 4212 when the blacklist unauthorization notification frame (a frame that cannot be distinguished from the unauthorization notification frame in the seventh embodiment) has been from another device with respect to the frame transmitted from the own device (the terminal device 5011). In this case, for example, it can be presumed that there is unauthorization in the terminal device 5011.

It should be noted that as another configuration example, a frame of a different format from the unauthorization notification frame transmitted by the unauthorization detection device 4012 may be used as the blacklist unauthorization notification frame transmitted by the monitoring unit 5212. In this case, the abnormality control unit 4214 may have, for example, a function of identifying (specifying) the blacklist unauthorization notification frame.

As an example, the blacklist unauthorization notification frame may differ from the unauthorization notification frame only in that the blacklist unauthorization notification frame includes different identification information (ID). In this case, the abnormality control unit 4214 identifies (specifies) the blacklist unauthorization notification frame on the basis of the identification information (ID). When the blacklist unauthorization notification frame is received from another device with respect to the frame transmitted from the own device (the terminal device 5011), the abnormality control unit 4214 can interrupt the communication using the interruption unit 4212. In this case, for example, it can be presumed that there is unauthorization in the terminal device 5011.

Further, in such a case, for example, in a process that is performed when the abnormality control unit 4214 has detected an unauthorized frame transmitted from the own device (the terminal device 5011) using the blacklist unauthorization notification frame and a process that is performed when the abnormality control unit 4214 has detected an unauthorized frame transmitted from the own device (the terminal device 5011) using the unauthorization notification frame, the same process may be performed or different processes may be performed.

### <Example of flow of process>

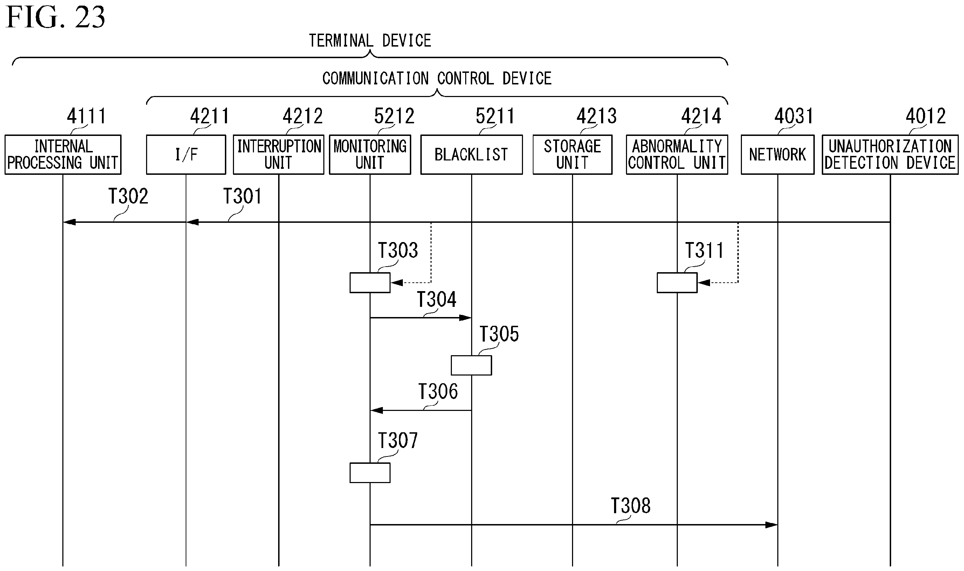

FIG. 23 is a diagram illustrating an example of a flow of a process that is performed in the communication system 5001 according to an embodiment (the seventh embodiment) of the present invention. Here, the processing regarding to the blacklist will be described.

In FIG. 23, the internal processing unit 4111, the interface 4211 that is a processing unit of the communication control unit 5111, the interruption unit 4212, the storage unit 4213, the abnormality control unit 4214, the blacklist 5211, and the monitoring unit 5212 are illustrated as processing units of the terminal device 5011.

In addition, in FIG. 23, the network 4031 and the unauthorization detection device 4012 are illustrated.

A case in which a frame transmitted via the network 4031 is received by the interface 4211 of the terminal device 5011 (process T301) and input to the internal processing unit 4111 is considered (process T302).

The frame input from the network 4031 to the interface 4211 of the terminal device 5011 is also input to the monitoring unit 5212 (process T303).

The monitoring unit 5212 reads out the identification information (ID) included in the frame, and transmits a signal for inquiring whether the identification information (ID) is held in the blacklist of the blacklist 5211 (also referred to as a "blacklist inquiry signal") to the blacklist 5211 (process T304).

In response to the blacklist inquiry signal received from the monitoring unit 5212, the blacklist 5211 determines whether or not the identification information (ID) related to the inquiry is held in the blacklist (process T305), and transmits a signal indicating a result of the determination to the monitoring unit 5212 (process T306).

In response to the signal received from the blacklist 5211, the monitoring unit 5212 determines whether or not the identification information (ID) related to the inquiry is held in the blacklist (process T307).

Here, in the example of FIG. 23, a case in which the identification information (ID) related to the inquiry is held in the blacklist is shown for convenience of description. In this case, the monitoring unit 5212 transmits a blacklist unauthorization notification frame including information indicating the result of the determination to the network 4031 (process T308).

It should be noted that when the identification information (ID) related to the inquiry is not held in the blacklist, the monitoring unit 5212 does not transmit the blacklist unauthorization notification frame.

In addition, in the example of FIG. 23, the process (process T311) in which the abnormality control unit 4214 acquires a frame from the network 4031 is also illustrated, but subsequent processes will be omitted because the process are the same as in the case of the example of FIG. 20 according to the sixth embodiment.

Here, in the example of FIG. 23, a configuration in which the monitoring unit 5212 transmits the identification information (ID) related to the inquiry to the blacklist 5211, and the blacklist 5211 determines whether or not the identification information (ID) is held in the blacklist has been shown, whereas as another configuration example, a configuration in which the monitoring unit 5212 acquires information on the blacklist from the blacklist 5211, and determines whether or not the identification information (ID) is held in the blacklist on the basis of the information may be used.

### [Conclusions for seventh embodiment]

As described above, in the communication system 5001 according to the seventh embodiment, when a frame corresponding to the information held in the blacklist is received, the terminal device 5011 can notify the network 4031 side of a signal indicating the fact (a blacklist unauthorization notification frame).

Further, in the communication system 5001 according to the seventh embodiment, when the terminal device 5011 receives the blacklist unauthorization notification frame received from another device, the terminal device 5011 can determine whether or not the frame transmitted from the own device (the terminal device 5011) is an unauthorized frame. Accordingly, in the communication system 5001 according to the seventh embodiment, it is possible to specify the device that has transmitted the unauthorized frame related to the blacklist unauthorization notification frame.

### <Configuration example>

For example, it is possible to implement a communication control device (a device integrated with the terminal device in the seventh embodiment).

As a configuration example, in the communication control device, the control unit (the communication control unit 5111, and more specifically, the monitoring unit 5212 in the seventh embodiment) determines whether or not identification information held in a blacklist (the blacklist of the blacklist 5211 in the seventh embodiment) that holds identification information that is not transmitted by a device other than the terminal device (the terminal device 5011 in the seventh embodiment) is included in a frame transferred from the network (the network 4031 in the seventh embodiment) to the terminal device.

As a configuration example, in the communication control device, when the control unit determines that the identification information held in the blacklist is included in the frame transferred from the network to the terminal device, the control unit transmits information on a result of the determination (the blacklist unauthorization notification frame in the seventh embodiment) to the network.

It should be noted that similarly, it is also possible to implement a communication control method, a program, or the like.

### [Fifth to seventh embodiments]

Each of the communication system 3001 according to the fifth embodiment, the communication system 4001 according to the sixth embodiment, and the communication system 5001 according to the seventh embodiment may be applied to a communication system of the CAN (a CAN system). In this case, each communication system may include, for example, the same relay device as the relay device 523 illustrated in FIG. 9 according to the fourth embodiment. Further, each communication system may include, for example, the same management device as the management device 514 illustrated in FIG. 9 according to the fourth embodiment. In addition, each of the communication systems may include, for example, two or more types of terminal units (for example, the terminal devices or a combination of the terminal device and the transfer control device or the like) illustrated in the first to seventh embodiments or may include the same terminal device as a terminal device of the related art.

Further, the transfer control device 3011 or the terminal device 3012 according to the fifth embodiment, the terminal device 4011 according to the sixth embodiment, and the terminal device 5011 according to the seventh embodiment may have, for example, the same hardware configuration as illustrated in FIG. 17 according to the fourth embodiment.

Here, in the example of FIG. 1 according to the first embodiment, the transfer control device 11 (the transfer control device 71 in the example of FIG. 3) and the terminal device 12 are configured separately, and in the example of FIG. 18 according to the fifth embodiment, the transfer control device 3011 and the terminal device 3012 are configured separately.

On the other hand, in the example of FIG. 20 according to the sixth embodiment, the terminal device 4011 in which the function of the transfer control device 11 (the transfer control device 71 in the example of FIG. 3) and the function of the terminal device 12 in the example of FIG. 1 according to the first embodiment are substantially integrated is configured. Further, in the example of FIG. 22 according to the seventh embodiment, the terminal device 5011 in which the function of the transfer control device 3011 and the function of the terminal device 3012 in the example of FIG. 18 according to the fifth embodiment are substantially integrated is configured.

Such a device configuration is an example, and each function illustrated in each embodiment may be arbitrarily distributed to and included in one or more arbitrary devices and may be realized by one or more arbitrary devices.

### <Configuration example>

For example, it is possible to implement a communication control device.

As a configuration example, a transmission control device included in a communication system in which a terminal device communicates a frame free of any transmission source information via a network, wherein a detection device having a function of detecting a frame having a specific property and a function of transmitting first information on the frame having a specific property to the network when the frame having the specific property has been detected is connected to the network, the transmission control device includes a control unit that refers to a frame storage unit that stores a frame that is a transmission target output from the terminal device to the network when the control unit determines that the first information has been received from the detection device connected to the network on the basis of information for determining being the first information transmitted by the detection device, and performs a first determination to determine whether or not the frame having a specific property specified on the basis of the received first information is stored in the frame storage unit, and the first information includes information on content of the frame that is a transmission target from the terminal device to the network as it is or digest information of the frame that is a transmission target.

As a configuration example, in the communication control device, the control unit determines whether the identification information held in the blacklist holding the identification information that is not transmitted by a device other than the terminal device is included in the frame transferred from the network to the terminal device.

As a configuration example, in the communication control device, when the control unit determines that the identification information held in the blacklist is included in the frame transferred from the network to the terminal device, the control unit transmits information on a result of the determination to the network.

Similarly, it is possible to implement a communication control method and a program.

As a configuration example, a communication control method that is executed by a control unit included in a communication control device included in a communication system in which a terminal device communicates a frame free of any transmission source information via a network, wherein a detection device having a function of detecting a frame having a specific property and a function of transmitting first information on the frame having a specific property to the network when the frame having the specific property has been detected is connected to the network, the control unit refers to a frame storage unit that stores a frame that is a transmission target output from the terminal device to the network when the control unit determines that the first information has been received from the detection device connected to the network on the basis of information for determining being the first information transmitted by the detection device, and determines whether or not the frame having a specific property specified on the basis of the received first information is stored in the frame storage unit, and the first information includes information on content of the frame that is a transmission target from the terminal device to the network as it is or digest information of the frame that is a transmission target.

As a configuration example, a program for causing a computer constituting a communication control device included in a communication system in which a terminal device communicates a frame free of any transmission source information via a network that communicates the frame, a detection device having a function of detecting a frame having a specific property and a function of transmitting first information on the frame having a specific property to the network when the frame having a specific property has been detected being connected to the network, to realize a function of referring to a frame storage unit that stores a frame that is a transmission target output from the terminal device to the network when it is determined that the first information has been received from the detection device connected to the network on the basis of information for determining being the first information transmitted by the detection device, and determining whether or not the frame having a specific property specified on the basis of the received first information is stored in the frame storage unit, wherein the first information includes information on content of the frame that is a transmission target output from the terminal device to the network as it is or digest information of the frame hat is a transmission target.

As a configuration example, a communication control device that is included in a communication system in which a terminal device communicates a frame free of any transmission source information via a network, wherein a detection device having a function of detecting a frame having a specific property, and a function of transmitting first information on the frame having a specific property to the network when the detection device detects a frame having a specific property is connected to the network, the communication control device includes a control unit that refers to a frame storage unit that stores a frame after transmission output from the terminal device to the network when the control unit determines that the first information has been received from the detection device connected to the network on the basis of information for determining being the first information transmitted by the detection device, and performs a first determination to determine whether or not the frame having a specific property specified on the basis of the received first information is stored in the frame storage unit, and
the first information includes information on content of the frame after transmission output from the terminal device to the network as it is or digest information of the frame after transmission.

As a configuration example, in the communication control device, the control unit determines whether the identification information held in the blacklist holding the identification information that is not transmitted by a device other than the terminal device is included in the frame transferred from the network to the terminal device.

As a configuration example, in the communication control device, when the control unit determines that the identification information held in the blacklist is included in the frame transferred from the network to the terminal device, the control unit transmits information on a result of the determination to the network.

Similarly, it is possible to implement a communication control method and a program.

As a configuration example, a communication control method that is executed by a control unit included in a communication control device included in a communication system in which a terminal device communicates a frame free of any transmission source information via a network, wherein a detection device having a function of detecting a frame having a specific property and a function of transmitting first information on the frame having a specific property to the network when the frame having the specific property has been detected is connected to the network, the control unit refers to a frame storage unit that stores a frame after transmission output from the terminal device to the network when the control unit determines that the first information has been received from the detection device connected to the network on the basis of information for determining being the first information transmitted by the detection device, and determines whether or not the frame having a specific property specified on the basis of the received first information is stored in the frame storage unit, and the first information includes information on content of the frame after transmission output from the terminal device to the network as it is or digest information of the frame after transmission.

As a configuration example, a program for causing a computer constituting a communication control device included in a communication system in which a terminal device communicates a frame free of any transmission source information via a network that communicates the frame, a detection device having a function of detecting a frame having a specific property and a function of transmitting first information on the frame having a specific property to the network when the frame having a specific property has been detected being connected to the network, to realize a function of referring to a frame storage unit that stores a frame after transmission output from the terminal device to the network when it is determined that the first information has been received from the detection device connected to the network on the basis of information for determining being the first information transmitted by the detection device, and determining whether or not the frame having a specific property specified on the basis of the received first information is stored in the frame storage unit, wherein the first information includes information on content of the frame after transmission output from the terminal device to the network as it is or digest information of the frame after transmission.

### [Conclusions for embodiments]

A program for realizing the functions of the various devices according to the above embodiments is recorded (stored) in a computer-readable recording medium (storage medium), the program recorded on the recording medium is read and executed by the computer system, and therefore, it is possible to perform a process.

It should be noted that the "computer system" referred to herein may include an operating system or hardware such as peripheral devices.

Further, the "computer-readable recording medium" refers to a flexible disk, a magneto-optical disc, a writable nonvolatile memory such as a read only memory (ROM) or a flash memory, a portable medium such as a digital versatile disc (DVD), or a storage device such as a hard disk built into the computer system.

Further, the "computer-readable recording medium" may also include a recording medium that holds a program for a short period of time, such as a volatile memory (for example, a DRAM) inside a computer system including a server and a client when the program is transmitted over a network such as the Internet or a communication line such as a telephone line.

Further, the above program may be transmitted from a computer system in which the program is stored in a storage device or the like to another computer system via a transmission medium or by transmission waves in the transmission medium.

Here, the "transmission medium" for transmitting the program means a medium having a function of transmitting information, such as a network (communication network) such as the Internet or a communication line such as a telephone line.

Further, the above program may be for realizing some of the above-described functions.

Furthermore, the above-described program may be a so-called difference file (a difference program) that can realize the above-described functions in a combination with a program already recorded in the computer system.

It should be noted that although the present invention has been described with reference to the embodiments, the technical scope of the present invention is not limited to the above embodiments. It will be apparent to those skilled in the art that various modifications or alternative aspects can be adopted without departing from the spirit and scope of the present invention.

### [Reference Signs List]

1, 2, 101, 201 to 202, 3001, 4001, 5001 Communication system
11, 71, 3011 Transfer control device
12, 212, 3012, 4011, 5011 Terminal device
13, 3013, 4012 Unauthorization detection device
31, 131, 231, 331, 3031, 4031 Network
51, 651, 3113 Transfer unit
52, 92, 172, 192, 554, 613, 812, 912, 3114, 4213 Storage unit
53, 93, 632, 713, 3115, 4214 Abnormality control unit
91, 631 Transfer and duplication unit
111, 213, 312 Communication device
112, 523 Relay device
113, 514 Management device
151, 633 Communication suppression unit
171, 191, 813, 913 Communication suppression control unit
211, 311 Transfer device
251, 351, 634 Retransmission unit
501 CAN system
511 Connector device
512 ECU
513 IDS
521 to 522 Terminal unit
531 Bus
551 to 552, 571, 3111, 3112, 3211, 4211 Interface
553 Transfer and duplication device
555 Control device
611 Terminal side communication unit
612 Bus side communication unit
614 Control unit
652 Duplication unit
671, 731 Abnormality determination unit
672, 732 Abnormality notification unit
691 Retransmission control unit
692 Transmission completion determination unit
711, 811, 911 Communication unit
712 Readout unit
831 Communication suppression frame determination unit
832, 931 Communication suppression information storage control unit
833 Communication suppression information notification unit
1011 Frame
1031 ID
1032 Control field
1033 Data field
1034 CRC sequence
1035 ACK slot
1111, 1121 ID allocation information
2011 Processing device
2101 Processor
2102 Memory
2103 Network interface
2104 Operation unit
2105 Display unit
2106 Storage device
2107 Input and output interface
3116, 5211 Blacklist
3117, 5212 Monitoring unit
3212, 4111 Internal processing unit
4112, 5111 Communication control unit
4212 Interruption unit

## Claims

1. A communication control device that is included in a communication system in which a terminal device communicates, via a network, a frame free of any transmission source information,
wherein a detection device is connected to the network, and the detection device has a function of detecting a frame having a specific property, and a function of transmitting first information on the frame having a specific property to the network when the detection device detected a frame having a specific property,
the communication control device comprises a control unit that refers to a frame storage unit that stores a frame that is a transmission target output from the terminal device to the network when the control unit determines that the first information has been received from the detection device connected to the network on the basis of information for determining being the first information transmitted by the detection device, and performs a first determination to determine whether or not the frame having a specific property specified on the basis of the received first information is stored in the frame storage unit, and
the first information includes information on content of the frame that is the transmission target output from the terminal device to the network as it is or digest information of the frame that is the transmission target.

2. The communication control device according to claim 1,
wherein the communication control device is a transfer control device that is included for each terminal device between the network and the terminal device and controls transfer of the frame between the network and the terminal device, and
the frame that is the transmission target is the frame that is a transfer target of the communication control device.

3. The communication control device according to claim 2, wherein, when the control unit determines that the frame having a specific property is stored in the frame storage unit in the first determination, the control unit stops a part or all of the transfer.

4. The communication control device according to claim 2 or 3, wherein, when the control unit determines that the frame having a specific property is stored in the frame storage unit in the first determination, the control unit transmits information on a result of the determination to the network.

5. The communication control device according to claim 4, wherein the information on the determination result in the first determination is not transmitted to the terminal device.

6. The communication control device according to any one of claims 2 to 5, wherein the first information on the frame having a specific property is not transmitted to the terminal device.

7. The communication control device according to any one of claims 2 to 6, comprising:
a transfer unit that performs the transfer.

8. The communication control device according to claim 1, wherein the communication control device is integrated with the terminal device.

9. The communication control device according to claim 8, wherein, when the control unit determines that the frame having a specific property is stored in the frame storage unit in the first determination, the control unit interrupts communication between the terminal device and the network.

10. The communication control device according to claim 8 or 9, wherein, when the control unit determines that the frame having a specific property is stored in the frame storage unit in the first determination, the control unit transmits information on a result of the determination to the network.

11. The communication control device according to any one of claims 1 to 10, wherein the digest information is information of content of a part of the frame that is a transmission target as it is or summary information of the content of the frame that is the transmission target.

12. The communication control device according to any one of claims 1 to 11, wherein the control unit performs a second determination to determine an abnormality in the terminal device when a frame matching a frame defined to be transmitted by a device that transmits the first information on the frame having a specific property is transmitted from the terminal device, as a determination separate from the first determination.

13. The communication control device according to any one of claims 1 to 12, wherein the control unit performs a third determination to determine the abnormality in the terminal device when a frame matching a frame defined to be transmitted by the control unit is transmitted from the terminal device, as a determination separate from the first determination.

14. The communication control device according to any one of claims 1 to 13, comprising:
the frame storage unit.

15. The communication control device according to any one of claims 1 to 14, wherein the frame having a specific property is an unauthorized frame.

16. The communication control device according to any one of claims 1 to 15, wherein the control unit determines whether or not identification information held in a blacklist holding the identification information that is not transmitted by a device other than the terminal device is included in the frame transferred from the network to the terminal device.

17. The communication control device according to claim 16, wherein, when the control unit determines that identification information held in the blacklist is included in the frame transferred from the network to the terminal device, the control unit transmits information on a result of the determination to the network.

18. A communication control method that is executed by a control unit included in a communication control device included in a communication system in which a terminal device communicates a frame free of any transmission source information via a network,
wherein a detection device having a function of detecting a frame having a specific property and a function of transmitting first information on the frame having a specific property to the network when the frame having the specific property has been detected is connected to the network,
the control unit refers to a frame storage unit that stores a frame that is a transmission target output from the terminal device to the network when the control unit determines that the first information has been received from the detection device connected to the network on the basis of information for determining being the first information transmitted by the detection device, and determines whether or not the frame having a specific property specified on the basis of the received first information is stored in the frame storage unit, and
the first information includes information on content of the frame that is the transmission target output from the terminal device to the network as it is or digest information of the frame that is the transmission target.

19. A program for causing a computer constituting a communication control device included in a communication system in which a terminal device communicates a frame free of any transmission source information via a network that communicates the frame, a detection device having a function of detecting a frame having a specific property and a function of transmitting first information on the frame having a specific property to the network when the frame having a specific property has been detected being connected to the network, to realize
a function of referring to a frame storage unit that stores a frame that is a transmission target output from the terminal device to the network when it is determined that the first information has been received from the detection device connected to the network on the basis of information for determining being the first information transmitted by the detection device, and determining whether or not the frame having a specific property specified on the basis of the received first information is stored in the frame storage unit,
wherein the first information includes information on content of the frame that is the transmission target output from the terminal device to the network as it is or digest information of the frame that is the transmission target.

20. A communication control device that is included in a communication system in which a terminal device communicates a frame free of any transmission source information via a network,
wherein a detection device having a function of detecting a frame having a specific property, and a function of transmitting first information on the frame having a specific property to the network when the detection device detects a frame having a specific property is connected to the network,
the communication control device includes a control unit that refers to a frame storage unit that stores a frame after transmission output from the terminal device to the network when the control unit determines that the first information has been received from the detection device connected to the network on the basis of information for determining being the first information transmitted by the detection device, and performs a first determination to determine whether or not the frame having a specific property specified on the basis of the received first information is stored in the frame storage unit, and
the first information includes information on content of the frame after transmission output from the terminal device to the network as it is or digest information of the frame after transmission.

21. The communication control device according to claim 20,
wherein the communication control device is a transfer control device that controls transfer of the frame between the network and the terminal device, and
the frame after transmission is the frame after transfer by the communication control device.

22. The communication control device according to claim 21, wherein, when the control unit determines that the frame having a specific property is stored in the frame storage unit in the first determination, the control unit stops a part or all of the transfer.

23. The communication control device according to claim 21 or 22, wherein, when the control unit determines that the frame having a specific property is stored in the frame storage unit in the first determination, the control unit transmits information on a result of the determination to the network.

24. The communication control device according to claim 23, wherein the information on the determination result in the first determination is not transmitted to the terminal device.

25. The communication control device according to any one of claims 21 to 24, wherein the first information on the frame having a specific property is not transmitted to the terminal device.

26. The communication control device according to any one of claims 21 to 25,
wherein communication control devices are included with the terminal devices on a one-to-one basis, and
the control unit performs a second determination to determine an abnormality in the terminal device when a frame matching a frame defined to be transmitted by a device that transmits the first information on the frame having a specific property is transmitted from the terminal device, as a determination separate from the first determination.

27. The communication control device according to any one of claims 21 to 26,
wherein communication control devices are included with the terminal devices on a one-to-one basis, and
the control unit performs a third determination to determine an abnormality in the terminal device when a frame matching a frame defined to be transmitted by the control unit is transmitted from the terminal device, as a determination separate from the first determination.

28. The communication control device according to any one of claims 21 to 27, comprising:
a transfer unit that performs the transfer.

29. The communication control device according to claim 20, wherein the communication control device is integrated with the terminal device.

30. The communication control device according to claim 29, wherein, when the control unit determines that the frame having a specific property is stored in the frame storage unit in the first determination, the control unit interrupts communication between the terminal device and the network.

31. The communication control device according to claim 29 or 30, wherein, when the control unit determines that the frame having a specific property is stored in the frame storage unit in the first determination, the control unit transmits information on a result of the determination to the network.

32. The communication control device according to any one of claims 29 to 31, wherein the control unit performs a second determination to determine an abnormality in the terminal device when a frame matching a frame defined to be transmitted by a device transmitting the first information on the frame having a specific property is transmitted from the terminal device, as a determination separate from the first determination.

33. The communication control device according to any one of claims 29 to 32, wherein the control unit performs a third determination to determine an abnormality in the terminal device when a frame matching a frame defined to be transmitted by the control unit is transmitted from the terminal device, as a determination separate from the first determination.

34. The communication control device according to any one of claims 20 to 33, wherein the digest information is information of content of a part of the frame after the transmission as it is or summary information of the content of the frame after the transmission.

35. The communication control device according to any one of claims 20 to 34, comprising:
the frame storage unit.

36. The communication control device according to any one of claims 20 to 35, wherein the frame having a specific property is an unauthorized frame.

37. The communication control device according to any one of claims 20 to 36, wherein the control unit determines whether or not identification information held in a blacklist holding the identification information that is not transmitted by a device other than the terminal device is included in the frame transferred from the network to the terminal device.

38. The communication control device according to claim 37, wherein, when the control unit determines that identification information held in the blacklist is included in the frame transferred from the network to the terminal device, the control unit transmits information on a result of the determination to the network.

39. A communication control method that is executed by a control unit included in a communication control device included in a communication system in which a terminal device communicates a frame free of any transmission source information via a network,
wherein a detection device having a function of detecting a frame having a specific property, and a function of transmitting first information on the frame having a specific property to the network when the detection device detects a frame having a specific property is connected to the network,
the control unit refers to a frame storage unit that stores a frame after transmission output from the terminal device to the network when the control unit determines that the first information has been received from the detection device connected to the network on the basis of information for determining being the first information transmitted by the detection device, and determines whether or not the frame having a specific property specified on the basis of the received first information is stored in the frame storage unit, and
the first information includes information on content of the frame after transmission output from the terminal device to the network as it is or digest information of the frame after transmission.

40. A program for causing a computer constituting a communication control device included in a communication system in which a terminal device communicates a frame free of any transmission source information via a network that communicates the frame, a detection device having a function of detecting a frame having a specific property and a function of transmitting first information on the frame having a specific property to the network when the frame having a specific property has been detected being connected to the network, to realize
a function of referring to a frame storage unit that stores a frame after transmission output from the terminal device to the network when it is determined that the first information has been received from the detection device connected to the network on the basis of information for determining being the first information transmitted by the detection device, and determining whether or not the frame having a specific property specified on the basis of the received first information is stored in the frame storage unit,
wherein the first information includes information on content of the frame after transmission output from the terminal device to the network as it is or digest information of the frame after transmission.
